# EUROPEAN PATENT SPECIFICATION

(11) **EP 2 411 980 B1**
(45) Date of publication and mention of the grant of the patent: **06.03.2019**
(21) Application number: 09787021.6
(22) Date of filing: 25.08.2009
(51) Int. Cl.: G11B 27/034, G11B 27/34, H04N 5/262, H04N 5/265, H04N 5/225, H04N 5/232, H04N 9/82

(54) **VOICE-CONTROLLED IMAGE EDITING**
SPRACHGESTEUERTE BILDEDITIERUNG
EDITION D'IMAGES CONTRÔLÉE PAR LA VOIX

(30) Priority: 23.03.2009 US 408866
(43) Date of publication of application: 01.02.2012
(73) Proprietor: Sony Mobile Communications Inc., Shinagawa-ku Tokyo 140-0002 (JP)
(72) Inventor: ENGLUND, Hakan, S-136 69 Vendelso (SE)
(74) Representative: Aera A/S
(86) International application number: PCT/IB2009/053734
(87) International publication number: WO 2010/109274

(56) References cited:
- WO-A-2005/096621
- JP-A- 11 055 614
- JP-A- 2007 027 990
- JP-A- 2007 266 793
- US-A1- 2002 031 262

## Description

### BACKGROUND

Adding a speech balloon (speech bubble, dialog balloon, word balloon, thought balloon, etc.) to an image of object (e.g., person, place, or thing) is a popular pastime. There are web applications that enable users to upload images (e.g., photographs) and manually add speech balloons to them. In one photo tagging application, users can add quotes through speech balloons to photographs within an existing photo album, Certain devices (e.g., cameras, mobile telephones, etc.) use cameras and microphones to record images and/or video clips. However, other than using the web applications described above, these devices are unable to create speech balloons for the images and/or video clips captured by the devices.

JP 2007 027990 A is directed to generating and editing speech balloons and superimposed titles.

JP 2007 266793 A is directed to providing an image processing apparatus capable of compositing display data corresponding to sound at a proper position in an image.

JP 11 055614 A is directed to providing an image processing unit that receives a voice signal, applies speech recognition processing to the voice signal, converts the recognized voice signal into characters, displays the characters while superimposing them onto an input image, and records or prints out the resulting image.

### SUMMARY

Aspects of the present invention are defined in the appended claims.

### BRIEF DESCRIPTION OF THE DRAWINGS

The accompanying drawings, which are incorporated in and constitute a part of this specification, illustrate one or more implementations described herein and, together with the description, explain these implementations. In the drawings:
Fig. 1 depicts a diagram of an exemplary arrangement in which systems and/or methods described herein may be implemented;
Fig. 2 illustrates a diagram of an exemplary device in which systems and/or methods described herein may be implemented;
Figs. 3A and 3B depict front and rear views, respectively, of another exemplary device in which systems and/or methods described herein may be implemented;
Fig. 4 depicts a diagram of exemplary components of the devices illustrated in Figs. 2-3B;
Fig. 5 illustrates a diagram of an exemplary voice-controlled single person image editing operation capable of being performed by the devices depicted in Figs. 2-3B;
Fig. 6 depicts a diagram of exemplary components of the devices illustrated in Figs. 2-3B;
Fig. 7 illustrates a diagram of an exemplary voice-controlled multiple person image editing operation capable of being performed by the devices depicted in Figs. 2-3B;
Fig. 8 depicts a diagram of additional operations capable of being performed by the exemplary components illustrated in Fig. 6;
Fig. 9 illustrates a diagram of an exemplary voice-controlled animal image editing operation capable of being performed by the devices depicted in Figs. 2-3B;
Fig. 10 depicts a diagram of an exemplary voice-controlled object image editing operation capable of being performed by the devices illustrated in Figs. 2-3B;
Fig. 11 illustrates a diagram of an exemplary voice-controlled multiple person image editing operation capable of being performed by the devices depicted in Figs. 2-3B;
Fig. 12 depicts a diagram of an exemplary voice-controlled single person image editing operation capable of being performed by the devices illustrated in Figs. 2-3B;
Fig. 13 illustrates a diagram of an exemplary voice-controlled image editing and translation operation capable of being performed by the devices depicted in Figs. 2-3B;
Fig. 14 depicts a diagram of an exemplary voice-controlled image editing and translation operation capable of being performed by video glasses;
Fig. 15 illustrates a diagram of an exemplary voice-controlled multiple phrase image editing operation capable of being performed by the devices depicted in Figs. 2-3B; and
Figs. 16-18 depict a flow chart of an exemplary process for voice-controlled image editing according to implementations described herein.

### DETAILED DESCRIPTION

The following detailed description refers to the accompanying drawings. The same reference numbers in different drawings may identify the same or similar elements. Also, the following detailed description does not limit the invention.

### OVERVIEW

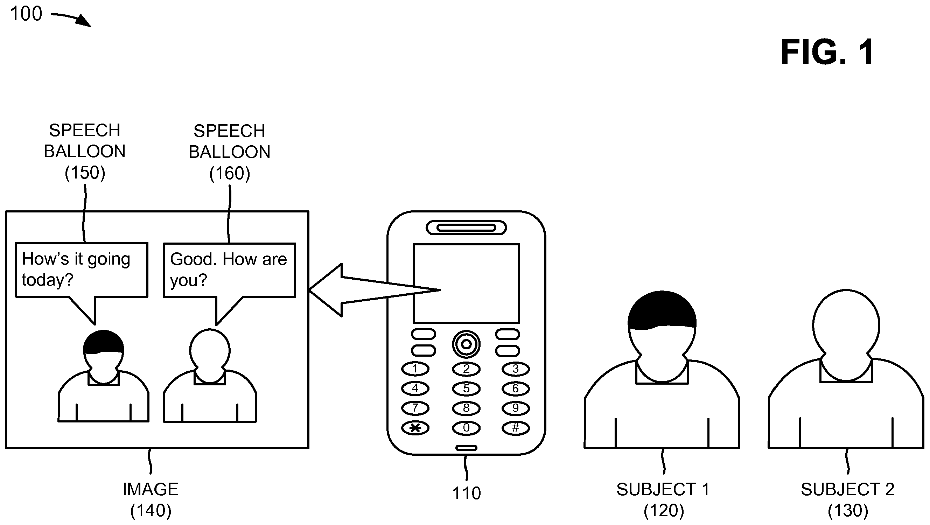

Systems and/or methods described herein may provide a device that performs voice-controlled image editing. For example, an exemplary arrangement as shown in Fig. 1, the systems and/or methods may provide a device 110 associated with two subjects (e.g., a first subject 120 and a second subject 130) whose image is to be captured by device 110. Device 110 may include a camera, a mobile telephone, etc. Subjects 120/130 may include people whose image is to be captured by device 110.

Device 110 may capture an image 140 of subjects 120/130 and may record audio associated with subjects 120/130 when image 140 is captured by device 110. Device 110 may capture and analyze video of subjects 120/130 to determine mouth movements of first subject 120 and mouth movements of second subject 130, and may compare the recorded audio to the mouth movements to determine portions of the audio that are associated with first subject 120 and second subject 130. Device 110 may translate the audio portions into text portions associated with each of subjects 120/130, may create a first speech balloon 150 that includes text associated with first subject 120, and may create a second speech balloon 160 that includes text associated with second subject 130. Device 110 may determine locations of the heads of subjects 120/130, may position first speech balloon 150 with the location of first subject's 120 head, and may position second speech balloon 160 with the location of second subject's 130 head to create a final version of image 140. Device 110 may also display and/or store the final version of image 140.

The description to follow will describe a device. As used herein, a "device" may include a radiotelephone; a personal communications system (PCS) terminal that may combine a cellular radiotelephone with data processing, facsimile, and data communications capabilities; a personal digital assistant (PDA) that can include a radiotelephone, pager, Internet/intranet access, web browser, organizer, calendar, a Doppler receiver, and/or global positioning system (GPS) receiver; a laptop; a GPS device; a personal computer; a camera (e.g., contemporary camera or digital camera); a video camera (e.g., a camcorder with camera capabilities); binoculars; a telescope; and/or any other device capable of utilizing a camera.

As used herein, a "camera" may include a device that may capture and store images and/or video. For example, a digital camera may be an electronic device that may capture and store images and/or video electronically instead of using photographic film as in contemporary cameras. A digital camera may be multifunctional, with some devices capable of recording sound and/or video, as well as images.

### EXEMPLARY DEVICE ARCHITECTURES

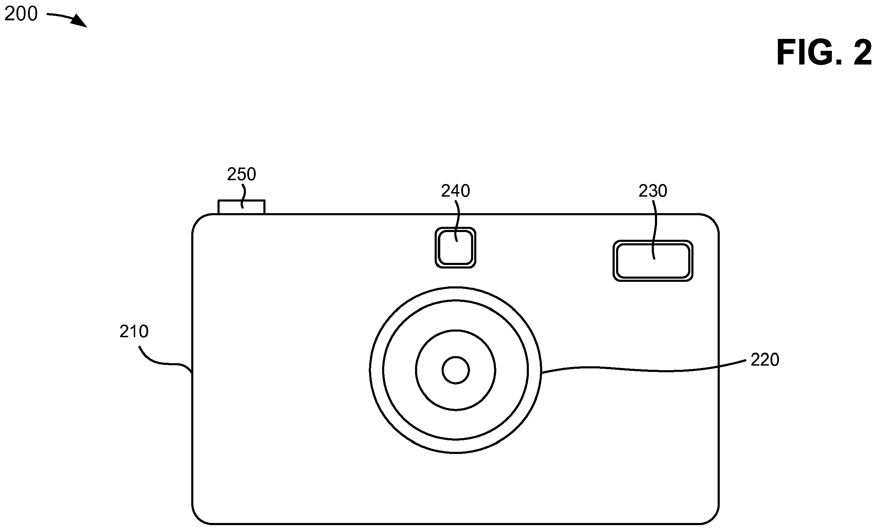

Fig. 2 depicts a diagram of an exemplary device 200 in which systems and/or methods described herein may be implemented. As shown in Fig. 2, device 200 may include a housing 210, a lens 220, a flash unit 230, a viewfinder 240, and a button 250. Housing 210 may protect the components of device 200 from outside elements.

Lens 220 may include a mechanically, electrically, and/or electromechanically controlled assembly of lens(es) whose focal length may be changed, as opposed to a prime lens, which may have a fixed focal length. Lens 220 may include "zoom lenses" that may be described by the ratio of their longest and shortest focal lengths. Lens 220 may work in conjunction with an autofocus system (not shown) that may enable lens 220 to obtain the correct focus on a subject, instead of requiring a user of device 200 to manually adjust the focus. The autofocus system may rely on one or more autofocus sensors (not shown) to determine the correct focus. The autofocus system may permit manual selection of the sensor(s), and may offer automatic selection of the autofocus sensor(s) using algorithms which attempt to discern the location of the subject. The data collected from the autofocus sensors may be used to control an electromechanical system that may adjust the focus of the optical system.

Flash unit 230 may include any type of flash units used in cameras. For example, in one implementation, flash unit 230 may include a light-emitting diode (LED)-based flash unit (e.g., a flash unit with one or more LEDs). In other implementations, flash unit 230 may include a flash unit built into device 200; a flash unit separate from device 200; an electronic xenon flash lamp (e.g., a tube filled with xenon gas, where electricity of high voltage is discharged to generate an electrical arc that emits a short flash of light); a microflash (e.g., a special, high-voltage flash unit designed to discharge a flash of light with a sub-microsecond duration); etc.

Viewfinder 240 may include a window that a user of device 200 may look through to view and/or focus on a subject. For example, viewfinder 240 may include an optical viewfinder (e.g., a reversed telescope); an electronic viewfinder (e.g., a cathode ray tube (CRT), liquid crystal display (LCD), or an organic light-emitting diode (OLED) based display that may be used as a viewfinder and/or to replay previously captured material); or a combination of the aforementioned.

Button 250 may include a mechanical or electromechanical button that may be used to capture an image of the subject by device 200. If the user of device 200 engages button 250, device 200 may engage lens 220 (and the autofocus system) and flash unit 230 in order to capture an image of the subject with device 200.

Although Fig. 2 shows exemplary components of device 200, in other implementations, device 200 may contain fewer, different, additional, or differently arranged components than depicted in Fig. 2. For example, device 200 may include a microphone that receives audible information from the user and/or a subject to be captured by device 200. In still other implementations, one or more components of device 200 may perform one or more other tasks described as being performed by one or more other components of device 200.

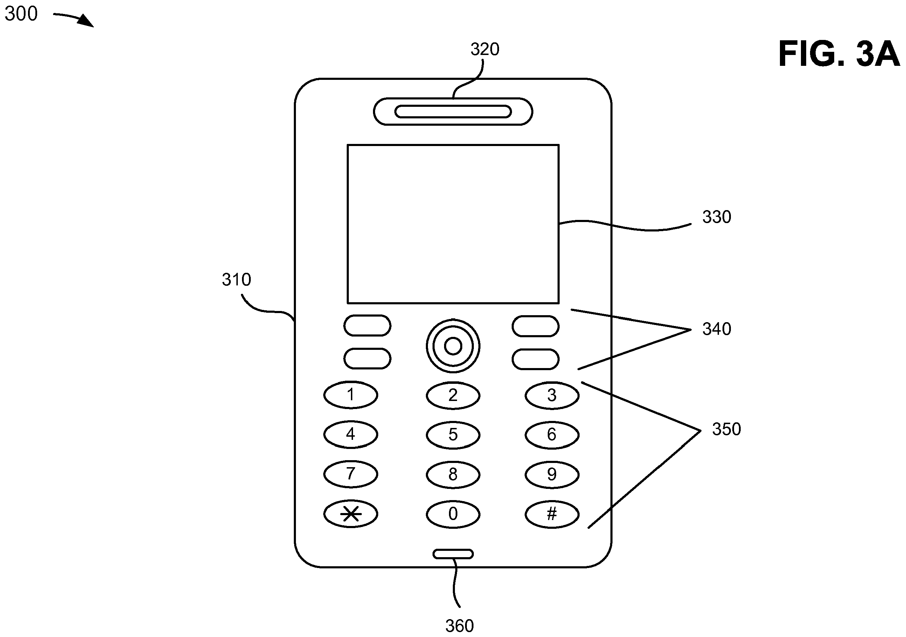

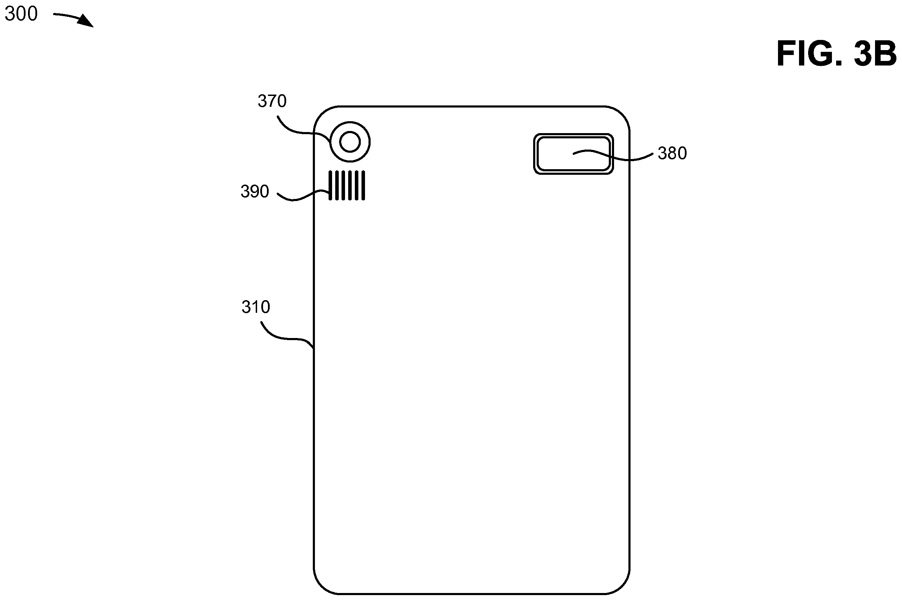

Figs. 3A and 3B illustrate front and rear views, respectively, of another exemplary device 300 in which systems and/or methods described herein may be implemented. As shown in Fig. 3A, device 300 may include a housing 310, a speaker 320, a display 330, control buttons 340, a keypad 350, and a microphone 360. Housing 310 may protect the components of device 300 from outside elements. Speaker 320 may provide audible information to a user of device 300.

Display 330 may provide visual information to the user. For example, display 330 may provide information regarding incoming or outgoing calls, media, games, phone books, the current time, etc. In another example, display 330 may provide an electronic viewfinder, e.g., a cathode ray tube (CRT), liquid crystal display (LCD), or an organic light-emitting diode (OLED) based display that a user of device 300 may look through to view and/or focus on a subject and/or to replay previously captured material.

Control buttons 340 may permit the user to interact with device 300 to cause device 300 to perform one or more operations. For example, control buttons 340 may be used to capture an image of the subject by device 300 in a similar manner as button 250 of device 200. Keypad 350 may include a standard telephone keypad. Microphone 360 may receive audible information from the user and/or a subject to be captured by device 300.

As shown in Fig. 3B, device 200 may further include a camera lens 370, a flash unit 380, and a microphone 390. Camera lens 370 may include components similar to the components of lens 220, and may operate in a manner similar to the manner lens 220 operates. Camera lens 370 may work in conjunction with an autofocus system (not shown) that may enable lens camera lens 370 to obtain the correct focus on a subject, instead of requiring a user of device 300 to manually adjust the focus. Flash unit 380 may include components similar to the components of flash unit 230, and may operate in a manner similar to the manner flash unit 230 operates. For example, in one implementation, flash unit 380 may include a LED-based flash unit (e.g., a flash unit with one or more LEDs). In other implementations, flash unit 380 may include a flash unit built into device 300; a flash unit separate from device 300; an electronic xenon flash lamp; a microflash; etc. Microphone 390 may receive audible information from the user and/or a subject to be captured by device 300.

Although Figs. 3A and 3B show exemplary components of device 300, in other implementations, device 300 may contain fewer, different, additional, or differently arranged components than depicted in Figs. 3A and 3B. In still other implementations, one or more components of device 300 may perform one or more other tasks described as being performed by one or more other components of device 300.

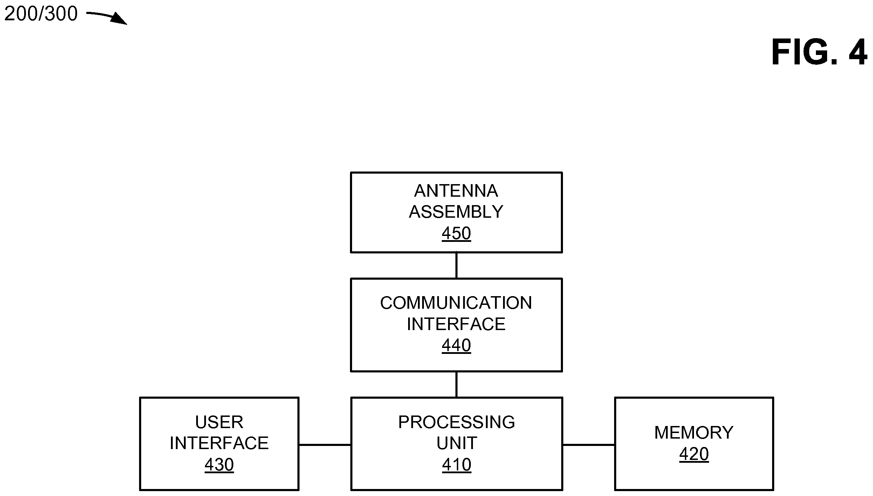

Fig. 4 illustrates a diagram of exemplary components of device 200 or 300. As shown in Fig. 4, device 200/300 may include a processing unit 410, a memory 420, a user interface 430, a communication interface 440, and an antenna assembly 450.

Processing unit 410 may include one or more processors, microprocessors, application specific integrated circuits (ASICs), field programmable gate arrays (FPGAs), or the like. Processing unit 410 may control operation of device 200/300 and its components.

Memory 420 may include a random access memory (RAM), a read only memory (ROM), and/or another type of memory to store data and instructions that may be used by processing unit 410.

User interface 430 may include mechanisms for inputting information to device 200/300 and/or for outputting information from device 200/300. Examples of input and output mechanisms might include a speaker (e.g., speaker 320) to receive electrical signals and output audio signals; a camera lens (e.g., lens 220 or camera lens 370) to receive image and/or video signals and output electrical signals; a microphone (e.g., microphones 360 or 390) to receive audio signals and output electrical signals; buttons (e.g., a joystick, button 250, control buttons 340, or keys of keypad 350) to permit data and control commands to be input into device 200/300; a display (e.g., display 330) to output visual information (e.g., image and/or video information received from camera lens 370); and/or a vibrator to cause device 200/300 to vibrate.

Communication interface 440 may include, for example, a transmitter that may convert baseband signals from processing unit 410 to radio frequency (RF) signals and/or a receiver that may convert RF signals to baseband signals. Alternatively, communication interface 440 may include a transceiver to perform functions of both a transmitter and a receiver. Communication interface 440 may connect to antenna assembly 450 for transmission and/or reception of the RF signals.

Antenna assembly 450 may include one or more antennas to transmit and/or receive RF signals over the air. Antenna assembly 450 may, for example, receive RF signals from communication interface 440 and transmit them over the air and receive RF signals over the air and provide them to communication interface 440. In one implementation, for example, communication interface 440 may communicate with a network (e.g., a local area network (LAN), a wide area network (WAN), a telephone network, such as the Public Switched Telephone Network (PSTN), an intranet, the Internet, or a combination of networks).

As described herein, device 200/300 may perform certain operations in response to processing unit 410 executing software instructions contained in a computer-readable medium, such as memory 420. A computer-readable medium may be defined as a physical or logical memory device. A logical memory device may include memory space within a single physical memory device or spread across multiple physical memory devices. The software instructions may be read into memory 420 from another computer-readable medium or from another device via communication interface 440. The software instructions contained in memory 420 may cause processing unit 410 to perform processes that will be described later. Alternatively, hardwired circuitry may be used in place of or in combination with software instructions to implement processes described herein. Thus, implementations described herein are not limited to any specific combination of hardware circuitry and software.

Although Fig. 4 shows exemplary components of device 200/300, in other implementations, device 200/300 may contain fewer, different, additional, or differently arranged components than depicted in Fig. 4. In still other implementations, one or more components of device 200/300 may perform one or more other tasks described as being performed by one or more other components of device 200/300.

### EXEMPLARY DEVICE OPERATIONS

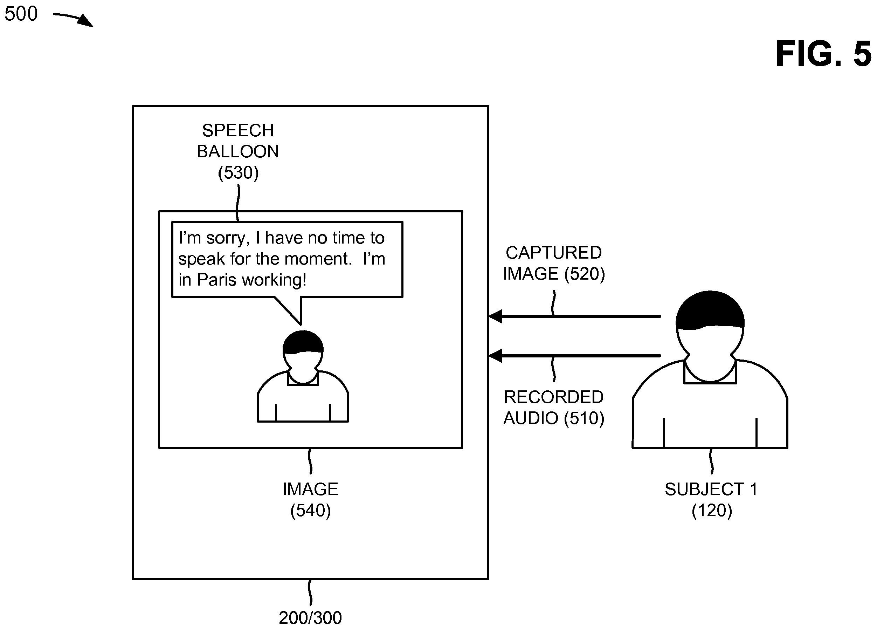

Fig. 5 illustrates a diagram of an exemplary voice-controlled single person image editing operation 500 capable of being performed by device 200/300. As shown, device 200/300 may be arranged with first subject 120 (e.g., a single person), so that device 200/300 may capture an image of first subject 120. A user of device 200/300 may select a speech balloon mode (e.g., an image capturing mode) associated with device 200/300, and device 200/300 may begin to record audio 510 associated with first subject 120 (e.g., via microphones 360/390). When the user takes a photograph, device 200/300 may capture an image 520 of first subject 120 and may store recorded audio 510 (e.g., that is near in time to a time when image 520 is captured) and captured image 520 in memory 420 of device 200/300. Recorded audio 510 may include audio that is recorded both before and after image 520 is captured by device 200/300. For example, recorded audio 510 may include words (e.g., "I'm sorry, I have no time to speak for the moment. I'm in Paris working!") spoken by first subject 120. Device 200/300 may shorten recorded audio 510 to an audio clip that documents words spoken (e.g., by subject 120) at around the time image 520 is captured. The audio clip may include full sentences by identifying quiet periods between recorded audio 510.

Device 200/300 may translate recorded audio 510 (e.g., the audio clip) into text using speech recognition software. In one implementation, speech recognition may be performed on recorded audio 510 with speech recognition software provided in device 200/300 (e.g., via processing unit 410 and memory 420 of device 200/300). In another implementation, speech recognition may be performed on recorded audio 510 with speech recognition software provided on a device communicating with device 200/300 (e.g., via communication interface 440). The speech recognition software may include any software that converts spoken words to machine-readable input (e.g., text). Examples of speech recognition software may include "Voice on the Go," "Vorero" provided by Asahi Kasei, "WebSphere Voice Server" provided by IBM, "Microsoft Speech Server," etc.

Device 200/300 may use face detection software to determine a location of first subject's 120 head in captured image 520. In one implementation, face detection may be performed on captured image 520 with face detection software provided in device 200/300 (e.g., via processing unit 410 and memory 420 of device 200/300). In another implementation, face detection may be performed on captured image 520 with face detection software provided on a device communicating with device 200/300 (e.g., via communication interface 440). The face detection software may include any face detection technology that determines locations and sizes of faces in images, detects facial features, and ignores anything else (e.g., buildings, trees, bodies, etc.).

Device 200/300 may create a speech balloon 530 that includes the translated text of recorded audio 510. Based on the determined location of first subject's 120 head in captured image 520, device 200/300 may position speech balloon 530 adjacent to first subject's 120 head in captured image 520. In one implementation, the user of device 200/300 may manually re-position speech balloon 530 in relation to captured image 520, and/or may manually edit text provided in speech balloon 530. Device 200/300 may combine the positioned speech balloon 530 and captured image 520 of first subject 120 to form a final image 540. Device 200/300 may display image 540 (e.g., via display 330) and/or may store image 540 (e.g., in memory 420).

Although Fig. 5 shows exemplary operations of device 200/300, in other implementations, device 200/300 may perform fewer, different, or additional operations than depicted in Fig. 5. In still other implementations, one or more components of device 200/300 may perform one or more other tasks described as being performed by one or more other components of device 200/300.

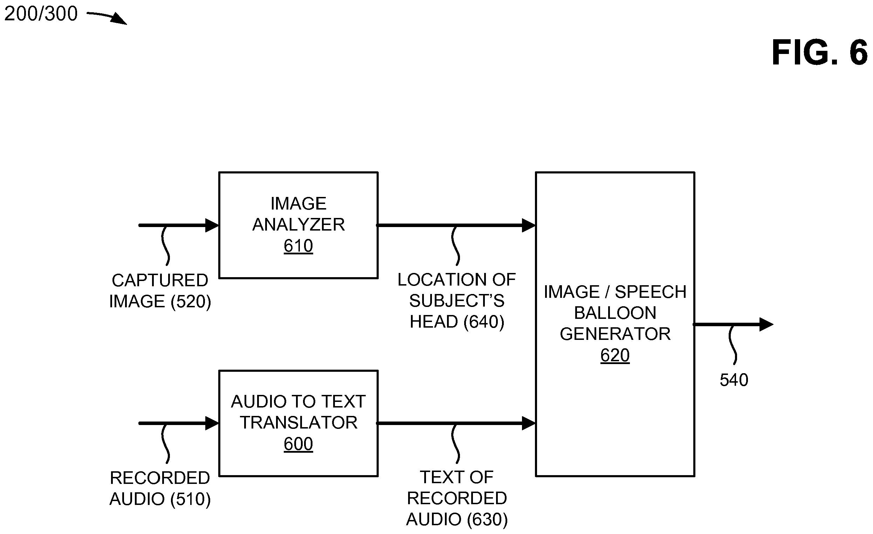

Fig. 6 depicts a diagram of exemplary components of device 200/300. As illustrated, device 200/300 may include an audio to text translator 600, an image analyzer 610, and an image/speech balloon generator 620. In one implementation, the functions described in Fig. 6 may be performed by one or more of the exemplary components of device 200/300 depicted in Fig. 4.

Audio to text translator 600 may include any hardware or combination of hardware and software that may receive recorded audio 510 (e.g., from first subject 120), and may translate recorded audio 510 (e.g., the audio clip) into text 630 (e.g., of recorded audio 510) using speech recognition software. In one implementation, speech recognition may be performed on recorded audio 510 with speech recognition software provided in device 200/300 (e.g., via audio to text translator 600). In another implementation, speech recognition may be performed on recorded audio 510 with speech recognition software provided on a device communicating with device 200/300 (e.g., via communication interface 440). Audio to text translator 600 may provide text 630 to image/speech balloon generator 620.

Image analyzer 610 may include any hardware or combination of hardware and software that may receive captured image 520 (e.g., of first subject 120), and may use face detection software to determine a location 640 of first subject's 120 head in captured image 520. In one implementation, face detection may be performed on captured image 520 with face detection software provided in device 200/300 (e.g., via image analyzer 610). In another implementation, face detection may be performed on captured image 520 with face detection software provided on a device communicating with device 200/300 (e.g., via communication interface 440). Image analyzer 610 may provide location 640 of first subject's 120 head in captured image 520 to image/speech balloon generator 620.

Image/speech balloon generator 620 may include any hardware or combination of hardware and software that may receive text 630 from audio to text translator 600, may receive location 640 from image analyzer 610, and may create speech balloon 530 that includes text 630. Based on location 640, image/speech balloon generator 620 may position speech balloon 530 adjacent to first subject's 120 head in captured image 520. Image/speech balloon generator 620 may combine the positioned speech balloon 530 and captured image 520 of first subject 120 to generate final image 540.

Although Fig. 6 shows exemplary components of device 200/300, in other implementations, device 200/300 may contain fewer, different, additional, or differently arranged components than depicted in Fig. 6. In still other implementations, one or more components of device 200/300 may perform one or more other tasks described as being performed by one or more other components of device 200/300.

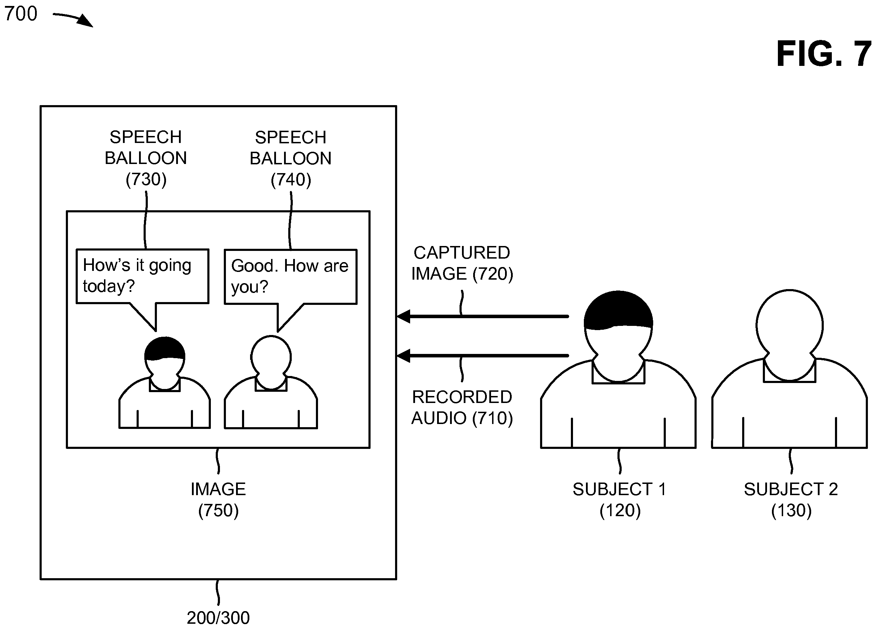

Fig. 7 illustrates a diagram of an exemplary voice-controlled multiple person image editing operation 700 capable of being performed by device 200/300. As shown, device 200/300 may be arranged with first subject 120 and second subject 130 (e.g., multiple persons), so that device 200/300 may capture an image of first subject 120 and second subject 130. A user of device 200/300 may select a speech balloon mode (e.g., an image capturing mode) associated with device 200/300, and device 200/300 may begin to record audio 710 associated with subjects 120/130 (e.g., via microphones 360/390). When the user takes a photograph, device 200/300 may capture an image 720 of subjects 120/130 and may store recorded audio 710 (e.g., that is near in time to a time when image 720 is captured) and captured image 720 in memory 420 of device 200/300. Recorded audio 710 may include audio that is recorded both before and after image 720 is captured by device 200/300. For example, recorded audio 710 may include words (e.g., "How's it going today? Good. How are you?") spoken by subjects 120/130. Device 200/300 may shorten recorded audio 710 to an audio clip that documents words spoken (e.g., by subjects 120/130) at around the time image 720 is captured. The audio clip may include full sentences by identifying quiet periods between recorded audio 710.

If more than a single person (e.g., subjects 120/130) is present in image 720 captured by device 200/300 and subjects 120/130 are both speaking, device 200/300 may need to identify which portions of recorded audio 710 are attributable to each of subjects 120/130. In order to achieve this, in one implementation, device 200/300 may analyze video (or multiple captured images) of subjects 120/130 to determine mouth movements of subjects 120/130, and may compare recorded audio 710 to the mouth movements to determine which portions of recorded audio 710 are attributable to each of subjects 120/130. In another implementation, device 200/300 may analyze recorded audio 710 to determine differences in voices of subjects 120/130, and may use this information to determine which portions of recorded audio 710 are attributable to each of subjects 120/130. In still another implementation, device 200/300 may include one or more directional microphones that may be used to determine which portions of recorded audio 710 are attributable to each of subjects 120/130. In still a further implementation, device 200/300 may utilize a combination of aforementioned techniques to determine which portions of recorded audio 710 are attributable to each of subjects 120/130.

Device 200/300 may translate recorded audio 710 (e.g., the audio clip) into text using speech recognition software. In one implementation, speech recognition may be performed on recorded audio 710 with speech recognition software provided in device 200/300 (e.g., via processing unit 410 and memory 420 of device 200/300). In another implementation, speech recognition may be performed on recorded audio 710 with speech recognition software provided on a device communicating with device 200/300 (e.g., via communication interface 440). Device 200/300 may create a speech balloon 730 that includes the translated text of the portion of recorded audio 710 that is attributable to first subject 120, and may create a speech balloon 740 that includes the translated text of the portion of recorded audio 710 that is attributable to second subject 130.

Device 200/300 may use face detection software to determine a location of each subject's 120/130 head in captured image 720. In one implementation, face detection may be performed on captured image 720 with face detection software provided in device 200/300 (e.g., via processing unit 410 and memory 420 of device 200/300). In another implementation, face detection may be performed on captured image 720 with face detection software provided on a device communicating with device 200/300 (e.g., via communication interface 440).

Based on the determined location of first subject's 120 head in captured image 720, device 200/300 may position speech balloon 730 adjacent to first subject's 120 head in captured image 720. Based on the determined location of second subject's 130 head in captured image 720, device 200/300 may position speech balloon 740 adjacent to second subject's 130 head in captured image 720. Device 200/300 may arrange speech balloons 730/740 according to a time order that the text provided in speech balloons 730/740 is spoken by subjects 120/130. For example, if first subject 120 spoke the text "How's it going today?" (e.g., provided in speech balloon 730) before second subject 130 spoke the text "Good. How are you?" (e.g., provided in speech balloon 740), then device 200/300 may arrange speech balloon 730 to the left (or on top) of speech balloon 740 in order to show the correct time order.

In one implementation, the user of device 200/300 may manually re-position speech balloons 730/740 in relation to captured image 720, and/or may manually edit text provided in speech balloons 730/740. Device 200/300 may combine the positioned speech balloons 730/740 and captured image 720 of subjects 120/130 to form a final image 750. Device 200/300 may display image 750 (e.g., via display 330) and/or may store image 750 (e.g., in memory 420).

Although Fig. 7 shows exemplary operations of device 200/300, in other implementations, device 200/300 may perform fewer, different, or additional operations than depicted in Fig. 7. In still other implementations, one or more components of device 200/300 may perform one or more other tasks described as being performed by one or more other components of device 200/300.

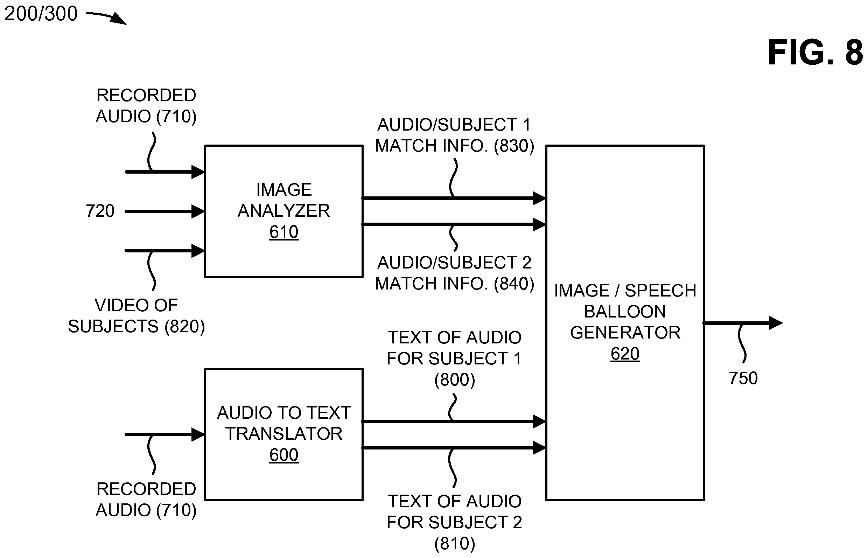

Fig. 8 depicts a diagram of additional operations capable of being performed by audio to text translator 600, image analyzer 610, and image/speech balloon generator 620 depicted in Fig. 6. In one implementation, the functions described in Fig. 8 may be performed by one or more of the exemplary components of device 200/300 depicted in Fig. 4.

Audio to text translator 600 may receive recorded audio 710 (e.g., from subjects 120/130), and may translate recorded audio 710 (e.g., the audio clip) into text 800 (e.g., of recorded audio 710) associated with first subject 120 and text 810 (e.g., of recorded audio 710) associated with second subject 130. Audio to text translator 600 may provide text 800 and text 810 to image/speech balloon generator 620.

Image analyzer 610 may receive recorded audio 710 and video 820 of subjects 120/130, may analyze video 820 to determine mouth movements of subjects 120/130, and may compare recorded audio 710 to the mouth movements to determine which portions of recorded audio 710 are attributable to each of subjects 120/130. Image analyzer 610 may analyze recorded audio 710 to determine differences in voices of subjects 120/130, and may use this information to determine which portions of recorded audio 710 are attributable to each of subjects 120/130. Image analyzer 610 may use face detection software to determine locations of subjects' 120/130 heads in captured image 720, and may combine the head location information with the determined portions of recorded audio 710 attributable to each of subjects 120/130 to produce audio/first subject match information 830 and audio/second subject match information 840. Image analyzer 610 may provide information 830 and 840 to image/speech balloon generator 620.

Image/speech balloon generator 620 may receive text 800/810 from audio to text translator 600, and may receive information 830/840 from image analyzer 610. Image/speech balloon generator 620 may position speech balloon 730 adjacent to first subject's 120 head in captured image 720, based on the determined location of first subject's 120 head in captured image 720. Image/speech balloon generator 620 may position speech balloon 740 adjacent to second subject's 130 head in captured image 720, based on the determined location of second subject's 130 head in captured image 720. Image/speech balloon generator 620 may combine the positioned speech balloons 730/740 and captured image 720 of subjects 120/130 to form final image 750.

Although Fig. 8 shows exemplary components of device 200/300, in other implementations, device 200/300 may contain fewer, different, additional, or differently arranged components than depicted in Fig. 8. In still other implementations, one or more components of device 200/300 may perform one or more other tasks described as being performed by one or more other components of device 200/300.

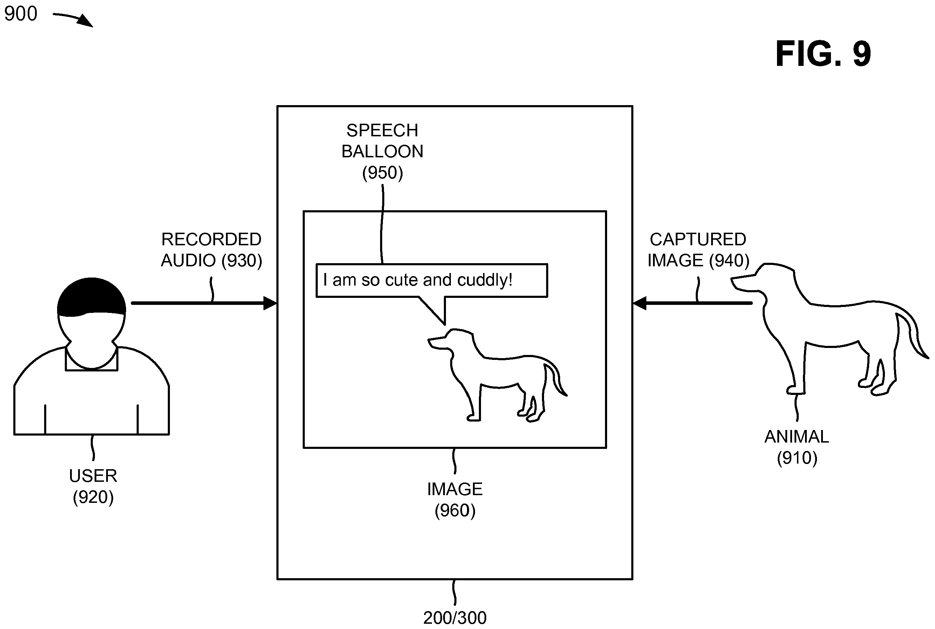

Fig. 9 illustrates a diagram of an exemplary voice-controlled animal image editing operation 900 capable of being performed by device 200/300. As shown, device 200/300 may be arranged with an animal 910 (e.g., a non-human organism that includes a head, such as a dog, a cat, a horse, etc.) and a user 920, so that user 920 (e.g., via device 200/300) may capture an image of animal 910. User 920 may select a speech balloon mode (e.g., an image capturing mode) associated with device 200/300, and device 200/300 may begin to record audio 930 provided by user 920 (e.g., via microphones 360/390). When user 920 takes a photograph, device 200/300 may capture an image 940 of animal 910 and may store recorded audio 930 (e.g., that is near in time to a time when image 940 is captured) and captured image 940 in memory 420 of device 200/300. Recorded audio 930 may include audio that is recorded both before and after image 940 is captured by device 200/300. For example, recorded audio 930 may include words (e.g., "I am so cute and cuddly!") spoken by user 920. Device 200/300 may shorten recorded audio 930 to an audio clip that documents words spoken (e.g., by user 920) at around the time image 940 is captured. The audio clip may include full sentences by identifying quiet periods between recorded audio 930.

Device 200/300 may translate recorded audio 930 (e.g., the audio clip) into text using speech recognition software. In one implementation, speech recognition may be performed on recorded audio 930 with speech recognition software provided in device 200/300 (e.g., via processing unit 410 and memory 420 of device 200/300). In another implementation, speech recognition may be performed on recorded audio 930 with speech recognition software provided on a device communicating with device 200/300 (e.g., via communication interface 440).

Device 200/300 may use face detection software to determine a location of animal's 910 head in captured image 940. In one implementation, face detection may be performed on captured image 940 with face detection software provided in device 200/300 (e.g., via processing unit 410 and memory 420 of device 200/300). In another implementation, face detection may be performed on captured image 940 with face detection software provided on a device communicating with device 200/300 (e.g., via communication interface 440).

Device 200/300 may create a speech balloon 950 that includes the translated text of recorded audio 930. Based on the determined location of animal's 910 head in captured image 940, device 200/300 may position speech balloon 950 adjacent to animal's 910 head in captured image 940. In one implementation, user 920 may manually re-position speech balloon 950 in relation to captured image 940, and/or may manually edit text provided in speech balloon 950. Device 200/300 may combine the positioned speech balloon 950 and captured image 940 of animal 910 to form a final image 960. Device 200/300 may display image 960 (e.g., via display 330) and/or may store image 960 (e.g., in memory 420).

Although Fig. 9 shows exemplary operations of device 200/300, in other implementations, device 200/300 may perform fewer, different, or additional operations than depicted in Fig. 9. In still other implementations, one or more components of device 200/300 may perform one or more other tasks described as being performed by one or more other components of device 200/300.

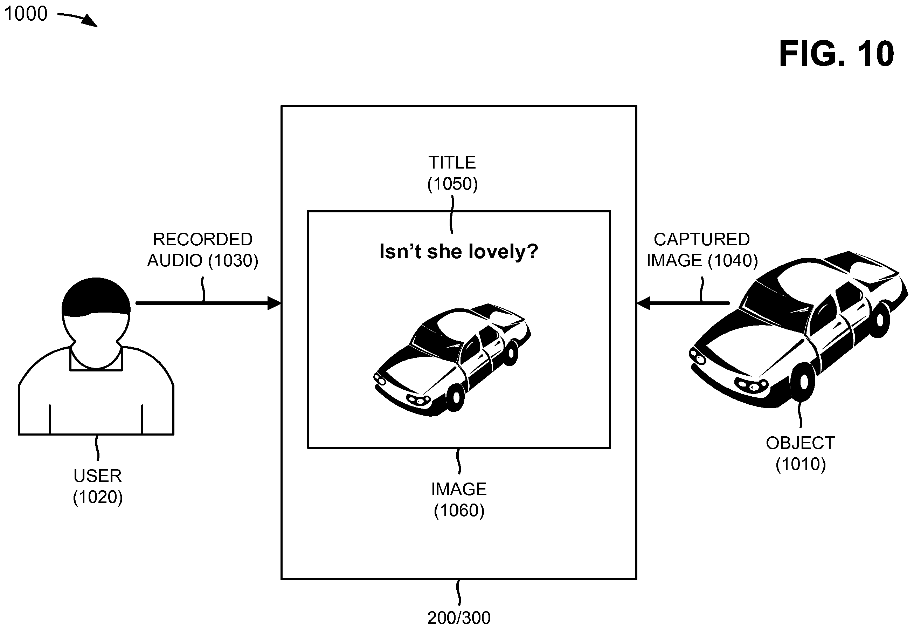

Fig. 10 depicts a diagram of an exemplary voice-controlled object image editing operation 1000 capable of being performed by device 200/300. As shown, device 200/300 may be arranged with an object 1010 (e.g., an inanimate object, such as car, a house, etc.) and a user 1020, so that user 1020 (e.g., via device 200/300) may capture an image of object 1010. User 1020 may select a speech balloon mode (e.g., an image capturing mode) associated with device 200/300, and device 200/300 may begin to record audio 1030 provided by user 1020 (e.g., via microphones 360/390). When user 1020 takes a photograph, device 200/300 may capture an image 1040 of object 1010 and may store recorded audio 1030 (e.g., that is near in time to a time when image 1040 is captured) and captured image 1040 in memory 420 of device 200/300. Recorded audio 1030 may include audio that is recorded both before and after image 1040 is captured by device 200/300. For example, recorded audio 1030 may include words (e.g., "Isn't she lovely?") spoken by user 1020. Device 200/300 may shorten recorded audio 1030 to an audio clip that documents words spoken (e.g., by user 1020) at around the time image 1040 is captured. The audio clip may include full sentences by identifying quiet periods between recorded audio 1030.

Device 200/300 may translate recorded audio 1030 (e.g., the audio clip) into text using speech recognition software. In one implementation, speech recognition may be performed on recorded audio 1030 with speech recognition software provided in device 200/300 (e.g., via processing unit 410 and memory 420 of device 200/300). In another implementation, speech recognition may be performed on recorded audio 1030 with speech recognition software provided on a device communicating with device 200/300 (e.g., via communication interface 440). Device 200/300 may use face detection software to determine a location of a head in captured image 1040. However, since object 1010 does not have head, device 200/300 may not detect a head in captured image 1040.

If no head is detected in captured image 1040, device 200/300 may create a title 1050 (e.g., for captured image 1040) that includes the translated text of recorded audio 1030. Device 200/300 may position title 1050 adjacent to object 1010 in captured image 1040 (e.g., as a title). In one implementation, user 1020 may manually re-position title 1050 in relation to captured image 1040, and/or may manually edit text provided in title 1050. Device 200/300 may combine the positioned title 1050 and captured image 1040 of object 1010 to form a final image 1060. Device 200/300 may display image 1060 (e.g., via display 330) and/or may store image 1060 (e.g., in memory 420).

Although Fig. 10 shows exemplary operations of device 200/300, in other implementations, device 200/300 may perform fewer, different, or additional operations than depicted in Fig. 10. In still other implementations, one or more components of device 200/300 may perform one or more other tasks described as being performed by one or more other components of device 200/300.

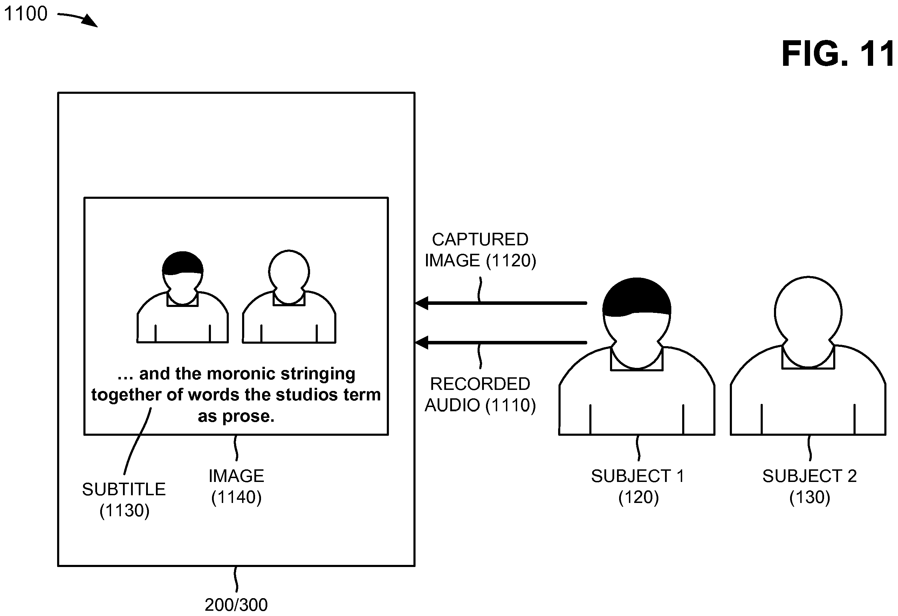

Fig. 11 illustrates a diagram of an exemplary voice-controlled multiple person image editing operation 1100 capable of being performed by device 200/300. As shown, device 200/300 may be arranged with first subject 120 and second subject 130 (e.g., multiple persons), so that device 200/300 may capture an image of first subject 120 and second subject 130. A user of device 200/300 may select a speech balloon mode (e.g., the image capturing mode) associated with device 200/300, and device 200/300 may begin to record audio 1110 associated with subjects 120/130 (e.g., via microphones 360/390). When the user takes a photograph, device 200/300 may capture an image 1120 of subjects 120/130 and may store recorded audio 1110 (e.g., that is near in time to a time when image 1120 is captured) and captured image 1120 in memory 420 of device 200/300. Recorded audio 1110 may include audio that is recorded both before and after image 1120 is captured by device 200/300. For example, recorded audio 1110 may include words (e.g., "... and the moronic stringing together of words the studios term as prose.") spoken by subjects 120/130. Device 200/300 may shorten recorded audio 1110 to an audio clip that documents words spoken (e.g., by subjects 120/130) at around the time image 1120 is captured. The audio clip may include full sentences by identifying quiet periods between recorded audio 1110.

Device 200/300 may attempt to identify which portions of recorded audio 1110 are attributable to each of subjects 120/130. In one implementation, device 200/300 may analyze video (or multiple captured images) of subjects 120/130 to determine mouth movements of subjects 120/130 and may compare recorded audio 1110 to the mouth movements to determine which portions of recorded audio 1110 are attributable to each of subjects 120/130. In another implementation, device 200/300 may analyze recorded audio 1110 to determine differences in voices of subjects 120/130, and may use this information to determine which portions of recorded audio 1110 are attributable to each of subjects 120/130. In still another implementation, device 200/300 may utilize a combination of aforementioned techniques to determine which portions of recorded audio 1110 are attributable to each of subjects 120/130.

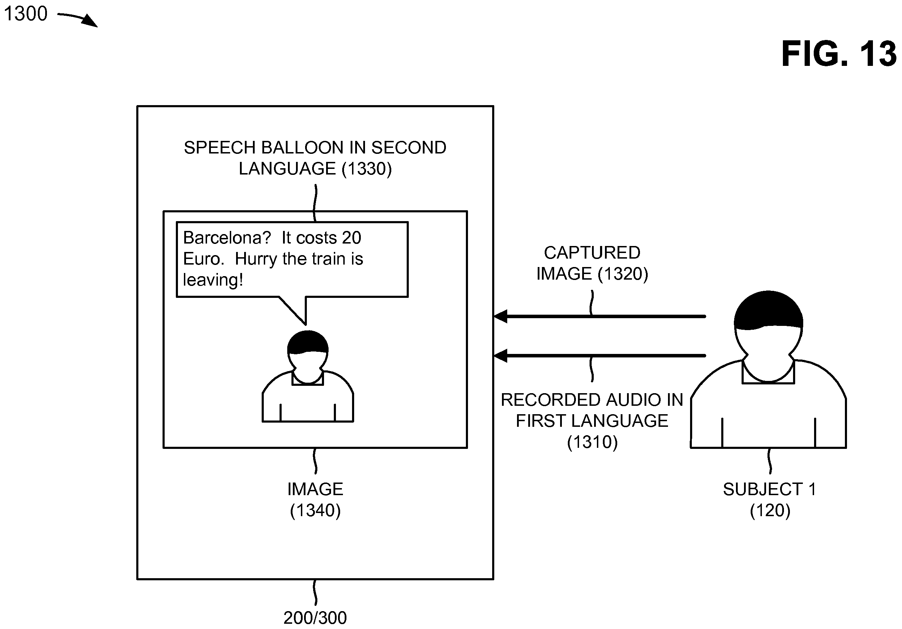

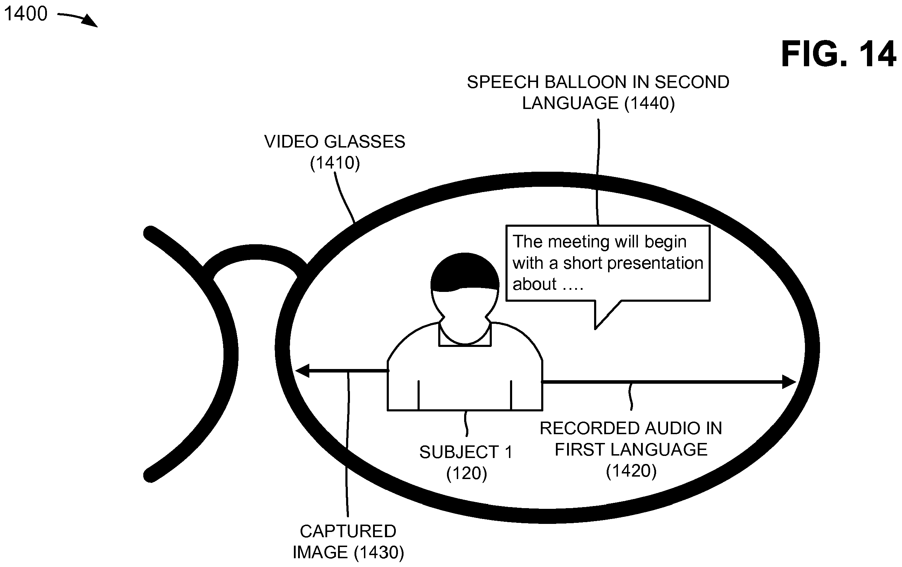

Device 200/300 may translate recorded audio 1110 (e.g., the audio clip) into text using speech recognition software. In one implementation, speech recognition may be performed on recorded audio 1110 with speech recognition software provided in device 200/300 (e.g., via processing unit 410 and memory 420 of device 200/300). In another implementation, speech recognition may be performed on recorded audio 1110 with speech recognition software provided on a device communicating with device 200/300 (e.g., via communication interface 440). If device 200/300 is unable to identify which portions of recorded audio 1110 are attributable to each of subjects 120/130, device 200/300 may create a subtitle 1130 that includes the translated text of recorded audio 1110. Subtitle 1130 may also be provided even if device 200/300 is able to identify which portions of recorded audio 1110 are attributable to each of subjects 120/130. Subtitle 1130 may display the translated text of recorded audio 1110 without the need to identify which portions of recorded audio 1110 are attributable to each of subjects 120/130. Subtitle 1130 may provide real-time translation of audio 1110 and may be used with video glasses (e.g., described below in connection with Fig. 14) for the hearing impaired and also for translation purposed (e.g., as described below in connection with Fig. 13). Real-time display of subtitle 1130 may preclude the need for speech balloons directed to a subject's head.

If device 200/300 is unable to identify which portions of recorded audio 1110 are attributable to each of subjects 120/130, device 200/300 may position subtitle 1130 adjacent to (e.g., below) subjects 120/130 in captured image 1120. In one implementation, the user of device 200/300 may manually re-position subtitle 1130 in relation to captured image 1120, and/or may manually edit text provided in subtitle 1130. Device 200/300 may combine the positioned subtitle 1130 and captured image 1120 of subjects 120/130 to form a final image 1140. Device 200/300 may display image 1140 (e.g., via display 330) and/or may store image 1140 (e.g., in memory 420).

Although Fig. 11 shows exemplary operations of device 200/300, in other implementations, device 200/300 may perform fewer, different, or additional operations than depicted in Fig. 11. In still other implementations, one or more components of device 200/300 may perform one or more other tasks described as being performed by one or more other components of device 200/300. For example, device 200/300 may add grey scale to image 1140, may emboss image 1140, may generate image 1140 as an oil painting, may crop or zoom image 1140 or a portion of image 1140, etc.

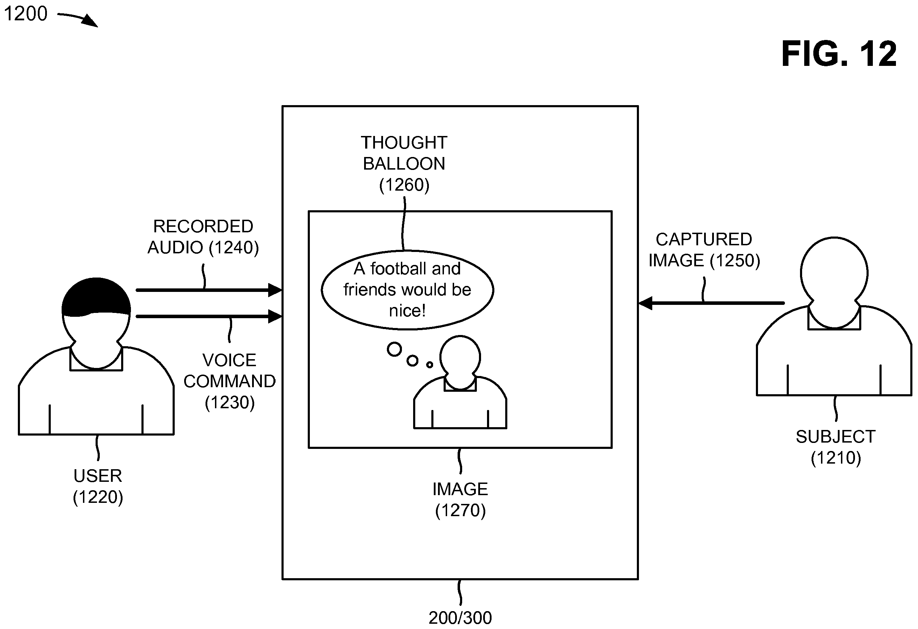

Fig. 12 depicts a diagram of an exemplary voice-controlled single person image editing operation 1200 capable of being performed by device 200/300. As shown, device 200/300 may be arranged with a subject 1210 (e.g., similar to subjects 120/130) and a user 1220, so that user 1220 (e.g., via device 200/300) may capture an image of subject 1210. User 1020 may select a speech balloon mode (e.g., an image capturing mode) associated with device 200/300, and may provide a voice command 1230 to device 200/300. Voice command 1230 may include a word or words that instruct device 200/300 to perform a specific operation. For example, voice command 1230 may include a command (e.g., "thought balloon") that instructs device 200/300 to perform a thought balloon operation. After receipt of voice command 1230, device 200/300 may begin to record audio 1240 provided by user 1220 (e.g., via microphones 360/390). When user 1220 takes a photograph, device 200/300 may capture an image 1250 of subject 1210 and may store recorded audio 1240 (e.g., that is near in time to a time when image 1250 is captured) and captured image 1250 in memory 420 of device 200/300. Recorded audio 1240 may include audio that is recorded both before and after image 1250 is captured by device 200/300. For example, recorded audio 1240 may include words (e.g., "A football and friends would be nice!") spoken by user 1220. Device 200/300 may shorten recorded audio 1240 to an audio clip that documents words spoken (e.g., by user 1220) at around the time image 1250 is captured. The audio clip may include full sentences by identifying quiet periods between recorded audio 1240.

Device 200/300 may translate recorded audio 1240 (e.g., the audio clip) into text using speech recognition software. In one implementation, speech recognition may be performed on recorded audio 1240 with speech recognition software provided in device 200/300 (e.g., via processing unit 410 and memory 420 of device 200/300). In another implementation, speech recognition may be performed on recorded audio 1240 with speech recognition software provided on a device communicating with device 200/300 (e.g., via communication interface 440).

Device 200/300 may use face detection software to determine a location of subject's 1210 head in captured image 1250. In one implementation, face detection may be performed on captured image 1250 with face detection software provided in device 200/300 (e.g., via processing unit 410 and memory 420 of device 200/300). In another implementation, face detection may be performed on captured image 520 with face detection software provided on a device communicating with device 200/300 (e.g., via communication interface 440).

Device 200/300 may create a thought balloon 1260 (e.g., based on voice command 1230) that includes the translated text of recorded audio 1240. Based on the determined location of subject's 1210 head in captured image 1250, device 200/300 may position thought balloon 1260 adjacent to subject's 1210 head in captured image 1250. In one implementation, user 1220 may manually re-position thought balloon 1260 in relation to captured image 1250, and/or may manually edit text provided in thought balloon 1260. Device 200/300 may combine the positioned thought balloon 1260 and captured image 1250 of subject 1210 to form a final image 1270. Device 200/300 may display image 1270 (e.g., via display 330) and/or may store image 1270 (e.g., in memory 420).

Although Fig. 12 shows exemplary operations of device 200/300, in other implementations, device 200/300 may perform fewer, different, or additional operations than depicted in Fig. 12. In still other implementations, one or more components of device 200/300 may perform one or more other tasks described as being performed by one or more other components of device 200/300.

Fig. 13 illustrates a diagram of an exemplary voice-controlled image editing and translation operation 1300 capable of being performed by device 200/300. As shown, device 200/300 may be arranged with first subject 120, so that device 200/300 may capture an image of first subject 120. A user of device 200/300 may select a speech balloon mode (e.g., an image capturing mode) associated with device 200/300, and device 200/300 may begin to record audio 1310 associated with first subject 120 (e.g., via microphones 360/390) and provided in a first language (e.g., Spanish). When the user takes a photograph, device 200/300 may capture an image 1320 of first subject 120 and may store recorded audio 1310 (e.g., that is near in time to a time when image 1320 is captured) and captured image 1320 in memory 420 of device 200/300. Recorded audio 1310 may include audio that is recorded both before and after image 1320 is captured by device 200/300. For example, recorded audio 1310 may include words (e.g., "Barcelona? Cuesta 20 euros. Rapido se va el tren!" which is Spanish for "Barcelona? It costs 20 Euro. Hurry the train is leaving!") spoken by first subject 120. Device 200/300 may shorten recorded audio 1310 to an audio clip that documents words spoken (e.g., by subject 120) at around the time image 1320 is captured. The audio clip may include full sentences by identifying quiet periods between recorded audio 1310.

Device 200/300 may translate recorded audio 1310 (e.g., the audio clip) into text, in a second language (e.g., English), using speech recognition software. In one implementation, speech recognition and language translation may be performed on recorded audio 1310 with speech recognition software provided in device 200/300 (e.g., via processing unit 410 and memory 420 of device 200/300). In another implementation, speech recognition and language translation may be performed on recorded audio 1310 with speech recognition software provided on a device communicating with device 200/300 (e.g., via communication interface 440).

Device 200/300 may use face detection software to determine a location of first subject's 120 head in captured image 1320. In one implementation, face detection may be performed on captured image 1320 with face detection software provided in device 200/300 (e.g., via processing unit 410 and memory 420 of device 200/300). In another implementation, face detection may be performed on captured image 1320 with face detection software provided on a device communicating with device 200/300 (e.g., via communication interface 440).

Device 200/300 may create a speech balloon 1330, in the second language (e.g., English), that includes the translated text (e.g., "Barcelona? It costs 20 Euro. Hurry the train is leaving!") of recorded audio 1310. Based on the determined location of first subject's 120 head in captured image 1320, device 200/300 may position speech balloon 1330 adjacent to first subject's 120 head in captured image 1320. In one implementation, the user of device 200/300 may manually re-position speech balloon 1330 in relation to captured image 1320, and/or may manually edit text provided in speech balloon 1330. Device 200/300 may combine the positioned speech balloon 1330 and captured image 1320 of first subject 120 to form a final image 1340. Device 200/300 may display image 1340 (e.g., via display 330) and/or may store image 1340 (e.g., in memory 420).

There may be some delay when interpreting and translating recorded audio 1310 before speech balloon 1330 (or a subtitle) will be displayed by device 200/300. Such a delay may be diminished by displaying portions of recorded audio 1310 are they are translated (e.g., rather than waiting for a complete translation of recorded audio 1310). For example, device 200/300 may display a words of recorded audio 1310 as soon as it is interpreted (and translated), rather than waiting for a complete sentence or a portion of a sentence to be interpreted (and translated). In such an arrangement, device 200/300 may display words with almost no delay and the user may begin interpreting recorded audio 1310. When a complete sentence or a portion of a sentence have been interpreted (and translated) by device 200/300, device 200/300 may rearrange the words to display a grammatically correct sentence or portion of a sentence. Device 200/300 may display interpreted (and translated) text in multiple lines, and may scroll upward or fade out previous lines of text as new recorded audio 1310 is received, interpreted, and displayed by device 200/300.

Although Fig. 13 shows exemplary operations of device 200/300, in other implementations, device 200/300 may perform fewer, different, or additional operations than depicted in Fig. 13. In still other implementations, one or more components of device 200/300 may perform one or more other tasks described as being performed by one or more other components of device 200/300.

Fig. 14 depicts a diagram of an exemplary voice-controlled image editing and translation operation 1400 capable of being performed by video glasses 1410. In one implementation, the operations described above in connection with Fig. 13 may be performed by video glasses 1410. Video glasses 1410 may include a frame, lenses for displaying images and/or video, a mini camera hidden inside the frame, microphones, the components of Fig. 4, etc. As shown in Fig. 14, video glasses 1410 may be arranged with first subject 120, so that video glasses 1410 may capture an image of first subject 120. A user wearing video glasses 1410 may select a speech balloon mode (e.g., an image capturing mode) associated with video glasses 1410, and video glasses 1410 may begin to record audio 1420 associated with first subject 120 and provided in a first language (e.g., Spanish). Video glasses 1410 may capture an image 1430 of first subject 120 and may store recorded audio 1420 (e.g., that is near in time to a time when image 1430 is captured) and captured image 1430 in video glasses 1410. Recorded audio 1420 may include audio that is recorded both before and after image 1430 is captured by video glasses 1410. For example, recorded audio 1310 may include words (e.g., "La reunion comenzara con una breve presentación acerca de ...." which is Spanish for "The meeting will begin with a short presentation about ....") spoken by first subject 120. Video glasses 1410 may shorten recorded audio 1420 to an audio clip that documents words spoken (e.g., by subject 120) at around the time image 1430 is captured. The audio clip may include full sentences by identifying quiet periods between recorded audio 1420.

Video glasses 1410 may translate recorded audio 1420 (e.g., the audio clip) into text, in a second language (e.g., English), using speech recognition software. In one implementation, speech recognition and language translation may be performed on recorded audio 1420 with speech recognition software provided in video glasses 1410. In another implementation, speech recognition and language translation may be performed on recorded audio 1420 with speech recognition software provided on a device communicating with video glasses 1410.

Video glasses 1410 may use face detection software to determine a location of first subject's 120 head. In one implementation, face detection may be performed on captured image 1430 with face detection software provided in video glasses 1410. In another implementation, face detection may be performed on captured image 1430 with face detection software provided on a device communicating with video glasses 1410.

Video glasses 1410 may create a speech balloon 1330, in the second language (e.g., English), that includes the translated text (e.g., "The meeting will begin with a short presentation about....") of recorded audio 1420. Based on the determined location of first subject's 120 head, video glasses 1410 may position speech balloon 1440 adjacent to first subject's 120 head. Video glasses 1410 may display speech balloon 1440 (e.g., on the lenses) adjacent to first subject's 120 head. Video glasses 1410 may automatically update the position of speech balloon 1440, with respect to first subject 120, if first subject 120 or the user wearing video glasses 1410 moves. Such an arrangement may enable the user wearing video glasses 1410 to obtain language translations on the fly. Video glasses 1410 may display and capture real-time video (e.g., for a deaf person watching a play). For example, in one implementation, video glasses 1410 may display speech balloon 1440 (or subtitles) on otherwise transparent glasses. In another implementation, video glasses 1410 may display real-time video of subject 120 along with speech balloon 1440 (or subtitles).

Although Fig. 14 shows exemplary operations of video glasses 1410, in other implementations, video glasses 1410 may perform fewer, different, or additional operations than depicted in Fig. 14. In still other implementations, one or more components of video glasses 1410 may perform one or more other tasks described as being performed by one or more other components of video glasses 1410. For example, video glasses 1410 may perform the tasks described herein as being performed by device 200/300.

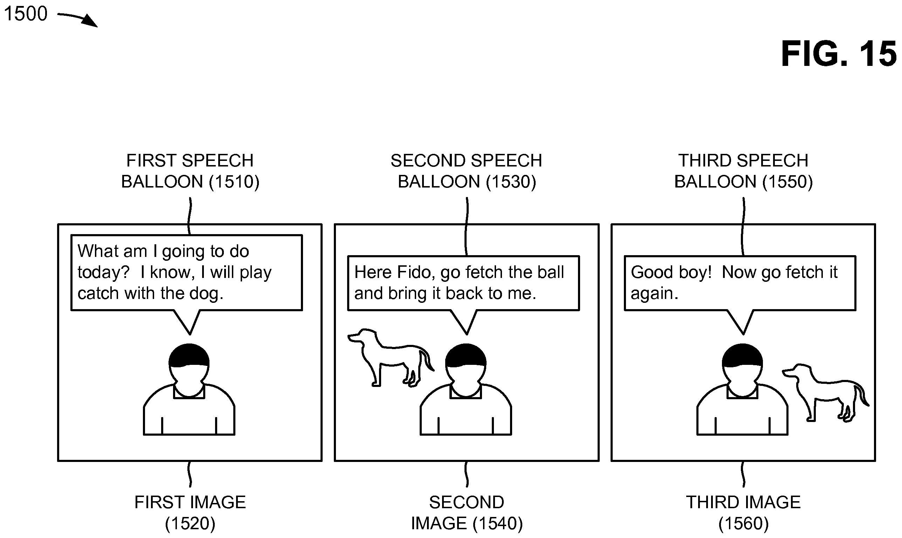

Fig. 15 illustrates a diagram of an exemplary voice-controlled multiple phrase image editing operation 1500 capable of being performed by device 200/300. As shown, if device receives multiple phrases or conversations via recorded audio, device 200/300 may divide such phrases or conversations into several speech balloons and may associate the speech balloons with time ordered images (e.g., like a comic strip of a flipchart). For example, as shown in Fig. 15, device 200/300 may create a first speech balloon 1510 and may associate first speech balloon 1510 with a first captured image to create a first image 1520. Device 200/300 may create a second speech balloon 1530 and may associate second speech balloon 1530 with a second captured image to create a second image 1540. Device 200/300 may create a third speech balloon 1550 and may associate third speech balloon 1550 with a third captured image to create a third image 1560. Device 200/300 may combine images 1520, 1540, and 1560, may display the combination (e.g., via display 330) and/or may store the combination (e.g., in memory 420).

Although Fig. 15 shows exemplary operations of device 200/300, in other implementations, device 200/300 may perform fewer, different, or additional operations than depicted in Fig. 15. In still other implementations, one or more components of device 200/300 may perform one or more other tasks described as being performed by one or more other components of device 200/300.

### EXEMPLARY PROCESS

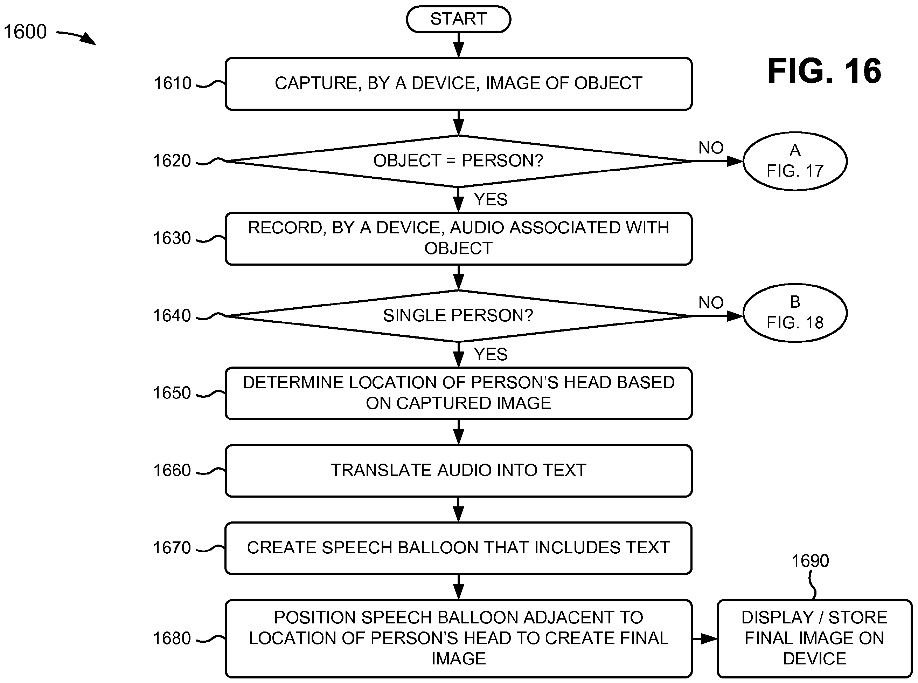

Figs. 16-18 depict a flow chart of an exemplary process 1600 for voice-controlled image editing according to implementations described herein. In one implementation, process 1600 may be performed by one or more components of device 200/300. In another implementation, some or all of process 1600 may be performed by another device or group of devices, including or excluding device 200/300.

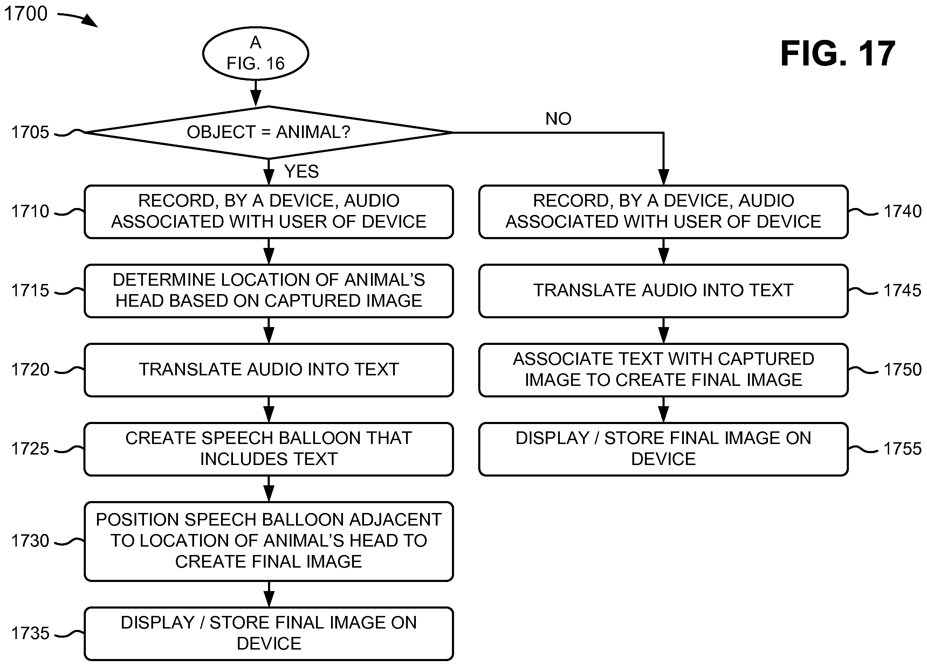

As illustrated in Fig. 16, process 1600 may begin with capturing, by a device, an image of an object (block 1610), and determining whether the object is person (block 1620). If the object is not a person (block 1620 - NO), process 1600 may continue to "A" in Fig. 17. Otherwise (block 1620 - YES), audio associated with the object may be recorded (block 1630). For example, in implementations described above in connection with Fig. 5, a user of device 200/300 may select a speech balloon mode (e.g., an image capturing mode) associated with device 200/300, and device 200/300 may begin to record audio 510 associated with first subject 120 (e.g., via microphones 360/390). When the user takes a photograph, device 200/300 may capture image 520 of first subject 120 and may store recorded audio 510 (e.g., that is near in time to a time when image 520 is captured) and captured image 520 in memory 420 of device 200/300. Recorded audio 510 may include audio that is recorded both before and after image 520 is captured by device 200/300. Device 200/300 may also determine whether first subject 120 is a person.

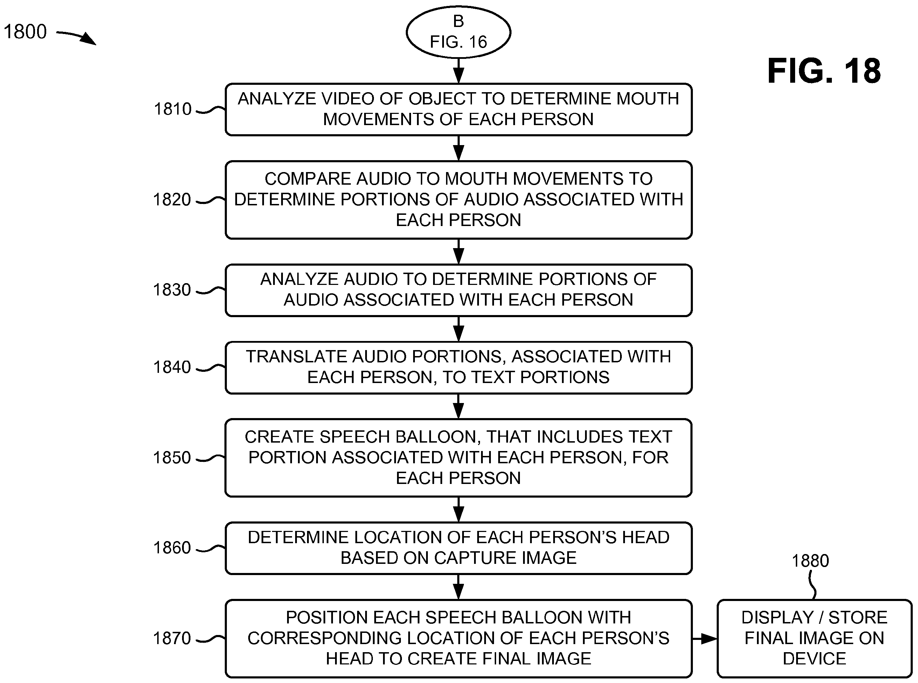

As further shown in Fig. 16, if the object is not determined to be a single person (block 1640 - NO), process 1600 may continue to "B" in Fig. 18. If the object is determined to be a single person (block 1640 - YES), a location of the person's head may be determined based on the captured image (block 1650). For example, in implementations described above in connection with Fig. 5, after determining that first subject 120 is a single person, device 200/300 may use face detection software to determine a location of first subject's 120 head in captured image 520. In one example, face detection may be performed on captured image 520 with face detection software provided in device 200/300 (e.g., via processing unit 410 and memory 420 of device 200/300). In another example, face detection may be performed on captured image 520 with face detection software provided on a device communicating with device 200/300 (e.g., via communication interface 440).

Returning to Fig. 16, the audio may be translated into text (block 1660), a speech balloon, that includes the text, may be created (block 1670), the speech balloon may be positioned adjacent to the location of the person's head to create a final image (block 1680), and the final image may be displayed and/or stored on the device (block 1690). For example, in implementations described above in connection with Fig. 5, device 200/300 may translate recorded audio 510 (e.g., the audio clip) into text using speech recognition software. Device 200/300 may create speech balloon 530 that includes the translated text of recorded audio 510. Based on the determined location of first subject's 120 head in captured image 520, device 200/300 may position speech balloon 530 adjacent to first subject's 120 head in captured image 520. In one example, the user of device 200/300 may manually re-position speech balloon 530 in relation to captured image 520, and/or may manually edit text provided in speech balloon 530. Device 200/300 may combine the positioned speech balloon 530 and captured image 520 of first subject 120 to form final image 540. Device 200/300 may display image 540 (e.g., via display 330) and/or may store image 540 (e.g., in memory 420).

As shown in Fig. 17, if the object is not a person (block 1620 - NO), it may be determined whether the object is an animal (block 1705). If the object is an animal (block 1705 - YES), audio associated with a user of the device may be recorded (block 1710) and a location of the animal's head may be determined based on the captured image (block 1715). For example, in implementations described above in connection with Fig. 9, after device 200/300 determines a subject to be an animal, user 920 may select a speech balloon mode (e.g., an image capturing mode) associated with device 200/300, and device 200/300 may begin to record audio 930 provided by user 920 (e.g., via microphones 360/390). When user 920 takes a photograph, device 200/300 may capture image 940 of animal 910 and may store recorded audio 930 (e.g., that is near in time to a time when image 940 is captured) and captured image 940 in memory 420 of device 200/300. Device 200/300 may translate recorded audio 930 into text using speech recognition software. Device 200/300 may use face detection software to determine a location of animal's 910 head in captured image 940.

As further shown in Fig. 17, a speech balloon, that includes the text, may be created (block 1725), the speech balloon may be positioned adjacent to the location of the animal's head to create a final image (block 1730), and the final image may be displayed and/or stored on the device (block 1740). For example, in implementations described above in connection with Fig. 9, device 200/300 may create speech balloon 950 that includes the translated text of recorded audio 930. Based on the determined location of animal's 910 head in captured image 940, device 200/300 may position speech balloon 950 adjacent to animal's 910 head in captured image 940. In one example, user 920 may manually re-position speech balloon 950 in relation to captured image 940, and/or may manually edit text provided in speech balloon 950. Device 200/300 may combine the positioned speech balloon 950 and captured image 940 of animal 910 to form final image 960. Device 200/300 may display image 960 (e.g., via display 330) and/or may store image 960 (e.g., in memory 420).

Returning to Fig. 17, if the object is not an animal (block 1705 - NO), audio associated with the user of the device may be recorded (block 1740) and the audio may be translated into text (block 1745). For example, in implementations described above in connection with Fig. 10, user 1020 may select a speech balloon mode (e.g., an image capturing mode) associated with device 200/300, and device 200/300 may begin to record audio 1030 provided by user 1020 (e.g., via microphones 360/390). When user 1020 takes a photograph, device 200/300 may capture image 1040 of object 1010 and may store recorded audio 1030 (e.g., that is near in time to a time when image 1040 is captured) and captured image 1040 in memory 420 of device 200/300. Device 200/300 may translate recorded audio 1030 (e.g., the audio clip) into text using speech recognition software.

As further shown in Fig. 17, the text may be associated with the captured image to create a final image (block 1750) and the final image may be displayed and/or stored on the device (block 1755). For example, in implementations described above in connection with Fig. 10, device 200/300 may use face detection software to determine a location of a head in captured image 1040. However, since object 1010 does not have head, device 200/300 may not detect a head in captured image 1040. If no head is detected in captured image 1040, device 200/300 may create title 1050 (e.g., for captured image 1040) that includes the translated text of recorded audio 1030. Device 200/300 may position title 1050 adjacent to object 1010 in captured image 1040 (e.g., as a title). In one example, user 1020 may manually re-position title 1050 in relation to captured image 1040, and/or may manually edit text provided in title 1050. Device 200/300 may combine the positioned title 1050 and captured image 1040 of object 1010 to form final image 1060. Device 200/300 may display image 1060 (e.g., via display 330) and/or may store image 1060 (e.g., in memory 420).

As shown in Fig. 18, if the object is not a single person (block 1640 - NO), video of the object may be analyzed to determine mouth movements of each person (block 1810), the audio may be compared to the mouth movements to determine portions of the audio associated with each person (block 1820), and/or the audio may be analyzed to determine portions of the audio associated with each person (block 1830). For example, in implementations described above in connection with Fig. 7, if more than a single person (e.g., subjects 120/130) is present in image 720 captured by device 200/300 and subjects 120/130 are both speaking, device 200/300 may need to identify which portions of recorded audio 710 are attributable to each of subjects 120/130. In order to achieve this, in one example, device 200/300 may analyze video (or multiple captured images) of subjects 120/130 to determine mouth movements of subjects 120/130, and may compare recorded audio 710 to the mouth movements to determine which portions of recorded audio 710 are attributable to each of subjects 120/130. In another example, device 200/300 may analyze recorded audio 710 to determine differences in voices of subjects 120/130, and may use this information to determine which portions of recorded audio 710 are attributable to each of subjects 120/130. In still another implementation, device 200/300 may utilize a combination of aforementioned techniques to determine which portions of recorded audio 710 are attributable to each of subjects 120/130.

As further shown in Fig. 18, the audio portions, associated with each person, may be translated to text portions (block 1840) and a speech balloon, that includes the text portion associated with each person, may be created for each person (block 1850). For example, in implementations described above in connection with Fig. 7, device 200/300 may translate recorded audio 710 into text using speech recognition software. Device 200/300 may create speech balloon 730 that includes the translated text of the portion of recorded audio 710 that is attributable to first subject 120, and may create speech balloon 740 that includes the translated text of the portion of recorded audio 710 that is attributable to second subject 130.

Returning to Fig. 18, a location of each person's head may be determined based on the captured image (block 1860), each speech balloon may be positioned with a corresponding location of each person's head to create a final image (block 1870), and the final image may be displayed and/or stored on the device (block 1880). For example, in implementations described above in connection with Fig. 7, device 200/300 may use face detection software to determine a location of each subject's 120/130 head in captured image 720. Based on the determined location of first subject's 120 head in captured image 720, device 200/300 may position speech balloon 730 adjacent to first subject's 120 head in captured image 720. Based on the determined location of second subject's 130 head in captured image 720, device 200/300 may position speech balloon 740 adjacent to second subject's 130 head in captured image 720. Device 200/300 may combine the positioned speech balloons 730/740 and captured image 720 of subjects 120/130 to form final image 750. Device 200/300 may display image 750 (e.g., via display 330) and/or may store image 750 (e.g., in memory 420).

### CONCLUSION

Systems and/or methods described herein may provide a device that performs voice-controlled image editing.

The foregoing description of implementations provides illustration and description, but is not intended to be exhaustive or to limit the invention to the precise form disclosed. Modifications and variations are possible in light of the above teachings or may be acquired from practice of the invention.

For example, while series of blocks have been described with regard to Figs. 16-18, the order of the blocks may be modified in other implementations. Further, non-dependent blocks may be performed in parallel.

It will be apparent that aspects, as described herein, may be implemented in many different forms of software, firmware, and hardware in the implementations illustrated in the figures. The actual software code or specialized control hardware used to implement these aspects is not limiting of the invention. Thus, the operation and behavior of these aspects were described without reference to the specific software code--it being understood that software and control hardware may be designed to implement these aspects based on the description herein.

Further, certain portions of the invention may be implemented as "logic" that performs one or more functions. This logic may include hardware, such as an application specific integrated circuit or a field programmable gate array, or a combination of hardware and software.

Even though particular combinations of features are recited in the claims and/or disclosed in the specification, these combinations are not intended to limit the invention. In fact, many of these features may be combined in ways not specifically recited in the claims and/or disclosed in the specification.

It should be emphasized that the term "comprises / comprising" when used herein is taken to specify the presence of stated features, integers, steps or components but does not preclude the presence or addition of one or more other features, integers, steps, components or groups thereof.

No element, act, or instruction used in the present application should be construed as critical or essential to the invention unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A method, comprising:
capturing (1610), by a device (200/300), an image of an object (1010);
when the object (1010) is a person (1620):
recording (1630), in a memory of the device (200/300), audio associated with the object (1010),
determining (1650), by a processor of the device (200/300), a location of the person's head in the captured image,
translating (1660), by the processor, the audio into text,
creating (1670), by the processor, a speech balloon that includes the text, and
positioning (1680), by the processor, the speech balloon adjacent to the location of the person's head in the captured image to create a final image, and wherein the method is **characterized in that** the method further comprises when the object (1010) is an animal (1705):
recording (1710) audio provided by a user of the device (200/300),
determining (1715) a location of the animal's head in the captured image,
translating (1720) the audio provided by the user into text,
creating (1725) a speech balloon that includes the text translated from the audio provided by the user, and
positioning (1730) the speech balloon, that includes the text translated from the audio provided by the user, adjacent to the location of the animal's head in the captured image to create a different image.

2. The method of claim 1, further comprising:
displaying (1735) the final image or the different image on a display of the device (200/300); and
storing (1735) the final image or the different image in the memory of the device (200/300).

3. The method of claim 1, further comprising:
when the object (1010) is an inanimate object (1705):
recording (1740) audio provided by the user of the device (200/300),
translating (1745) the audio provided by the user into user-provided text, and
associating (1750) the user-provided text with the captured image to create a user-defined image.

4. The method of claim 1, further comprising:
when the object (1010) includes multiple persons:
recording (1630) audio provided by the multiple persons,
analyzing (1810) video of the multiple persons to determine mouth movements of each person,
comparing (1820) the audio to the mouth movements of each person to determine portions of the audio that are associated with each person,
translating (1840) the audio portions, associated with each person, into text portions,
creating (1850), for each person, a speech balloon that includes a text portion associated with each person,
determining (1860) a location of each person's head based on the captured image, and
positioning (1870) each speech balloon with a corresponding location of each person's head to create a final multiple person image.

5. The method of claim 4, where when the object (1010) includes multiple persons, further comprising:
analyzing (1830) the audio to determine portions of the audio that are associated with each person.

6. The method of claim 1, where the audio is provided in a first language and where translating the audio into text comprises:
translating the audio into text provided in a second language that is different than the first language.

7. The method of claim 1, further comprising:
capturing a plurality of images of the object (1010);
creating a plurality of speech balloons, where each of plurality of speech balloons includes a portion of the text; and
associating each of the plurality of speech balloons with a corresponding one of the plurality of images to create a time-ordered image.

8. The method of claim 1, further comprising:
when receiving instructions to perform a thought balloon operation:
recording (1240) audio provided by the user of the device (200/300),
translating the audio provided by the user into user-provided text,
creating (1260) a thought balloon that includes the user-provided text, and
positioning the thought balloon adjacent to the location of the person's head in the captured image to create a thought balloon image.

9. The method of claim 1, where the device (200/300) includes at least one of:
a radiotelephone;
a personal communications system (PCS) terminal;
a camera;
a video camera with camera capabilities;
binoculars; or
video glasses.

10. A device (200/300) comprising:
a memory to store a plurality of instructions; and
a processor to execute instructions in the memory to:
capture (1610) an image of an object (1010),
when the object (1010) is a person:
record (1630) audio associated with the object (1010),
determine (1650) a location of the person's head in the captured image,
translate (1660) the audio into text,
create (1670) a speech balloon that includes the text, and
position (1680) the speech balloon adjacent to the location of the person's head in the captured image to create a final image, and wherein the device (200/300) is **characterized in that** the processor further executes instructions in the memory to:
when the object (1010) is an animal (1705):
record (1710) audio provided by a user of the device (200/300),
determine (1715) a location of the animal's head in the captured image,
translate (1720) the audio provided by the user into text,
create (1725) a speech balloon that includes the text translated from the audio provided by the user, and
position (1730) the speech balloon, that includes the text translated from the audio provided by the user, adjacent to the location of the animal's head in the captured image to create a different image, and
display (1735) the final image or the different image on a display of the device (200/300).

11. The device (200/300) of claim 10, where the processor further executes instructions in the memory to:
store (1735) the final image or the different image in the memory.

12. The device (200/300) of claim 10, where the processor further executes instructions in the memory to:
when the object (1010) is an inanimate object:
record (1740) audio provided by the user of the device (200/300),
translate (1745) the audio provided by the user into user-provided text, and
associate (1750) the user-provided text with the captured image to create a user-defined image.

13. The device (200/300) of claim 10, where the processor further executes instructions in the memory to:
when the object (1010) includes multiple persons:
record (1630) audio provided by the multiple persons,
analyze (1810) video of the multiple persons to determine mouth movements of each person,
compare (1820) the audio to the mouth movements of each person to determine portions of the audio that are associated with each person,
translate (1840) the audio portions, associated with each person, into text portions,
create (1850), for each person, a speech balloon that includes a text portion associated with each person,
determine (1860) a location of each person's head based on the captured image, and
position (1870) each speech balloon with a corresponding location of each person's head to create a final multiple person image.

14. The device (200/300) of claim 13, where when the object (1010) includes multiple persons, the processor further executes instructions in the memory to:
analyze (1830) the audio to determine portions of the audio that are associated with each person.

15. The device (200/300) of claim 10, where the audio is provided in a first language and, when translating the audio into text, the processor further executes instructions in the memory to:
translate the audio into text provided in a second language that is different than the first language.

16. The device (200/300) of claim 10, where the processor further executes instructions in the memory to:
capture a plurality of images of the object (1010),
create a plurality of speech balloons, where each of plurality of speech balloons includes a portion of the text, and
associate each of the plurality of speech balloons with a corresponding one of the plurality of images to create a time-ordered image.

17. The device (200/300) of claim 10, where the processor further executes instructions in the memory to:
when instructions are received to perform a thought balloon operation:
record (1240) audio provided by the user of the device (200/300),
translate the audio provided by the user into user-provided text,
create (1260) a thought balloon that includes the user-provided text, and
position the thought balloon adjacent to the location of the person's head in the captured image to create a thought balloon image.

18. A device (200/300) comprising:
means for capturing (1610) an image of an object (1010);
when the object (1010) is a person:
means for recording (1630) audio associated with the object (1010),
means for determining (1650), a location of the person's head in the captured image,
means for translating (1660) the audio into text,
means for creating (1670) a speech balloon that includes the text, and
means for positioning (1680) the speech balloon adjacent to the location of the person's head in the captured image to create a final image, and wherein the device (200/300) is **characterized in that** the device (200/300) further comprises:
when the object (1010) is an animal:
means for recording (1710) audio provided by a user of the device (200/300),
means for determining (1715) a location of the animal's head in the captured image,
means for translating (1720) the audio provided by the user into text,
means for creating (1725) a speech balloon that includes the text translated from the audio provided by the user, and
means for positioning (1730) the speech balloon, that includes the text translated from the audio provided by the user, adjacent to the location of the animal's head in the captured image to create an different image, and
means for displaying (1735) the final or different image; and
means for storing (1735) the final or different image.

## Patentansprüche

1. Verfahren, das Folgendes umfasst:
Erfassen (1610), durch eine Vorrichtung (200/300), eines Bildes eines Objekts (1010);
wenn das Objekt (1010) eine Person (1620) ist:
Aufzeichnen (1630), in einem Speicher der Vorrichtung (200/300), der audio-assoziiert mit dem Objekt (1010) ist,
Bestimmen (1650), durch einen Prozessor der Vorrichtung (200/300), einer Position des Kopfes der Person in dem erfassten Bild,
Übersetzen (1660), durch den Prozessor, des Audios in Text,
Kreieren (1670), durch den Prozessor, einer Sprechblase, die den Text beinhaltet, und
Positionieren (1680), durch den Prozessor, der Sprechblase angrenzend zu der Position des Kopfes der Person in dem erfassten Bild, um ein finales Bild zu kreieren, und wobei das Verfahren **dadurch gekennzeichnet ist, dass** das Verfahren ferner Folgendes umfasst:
wenn das Objekt (1010) ein Tier (1705) ist:
Aufzeichnen (1710) von Audio, das durch einen Nutzer der Vorrichtung (200/300) bereitgestellt ist,
Bestimmen (1715) einer Position des Kopfes des Tieres in dem erfassten Bild,
Übersetzen (1720) des durch den Nutzer bereitgestellten Audios in Text,
Kreieren (1725) einer Sprechblase, die den aus dem durch den Nutzer bereitgestellten Audio übersetzten Text beinhaltet, und
Positionieren (1730) der Sprechblase, die den aus dem durch den Nutzer bereitgestellten Audio übersetzten Text beinhaltet, angrenzend zu der Position des Kopfes des Tieres in dem erfassten Bild, um ein unterschiedliches Bild zu kreieren.

2. Verfahren nach Anspruch 1, das ferner Folgendes umfasst:
Anzeigen (1735) des finalen Bildes oder des unterschiedlichen Bildes auf einer Anzeige der Vorrichtung (200/300); und
Speichern (1735) des finalen Bildes oder des unterschiedlichen Bildes in dem Speicher der Vorrichtung (200/300).

3. Verfahren nach Anspruch 1, das ferner Folgendes umfasst:
wenn das Objekt (1010) ein lebloses Objekt (1705) ist:
Aufzeichnen (1740) von Audio, das durch den Nutzer der Vorrichtung (200/300) bereitgestellt ist,
Übersetzen (1745) des durch den Nutzer bereitgestellten Audios in einen von dem Nutzer bereitgestellten Text, und
Assoziieren (1750) des von dem Nutzer bereitgestellten Texts mit dem erfassten Bild, um ein benutzerdefiniertes Bild zu kreieren.

4. Verfahren nach Anspruch 1, das ferner Folgendes umfasst:
wenn das Objekt (1010) mehrere Personen beinhaltet:
Aufzeichnen (1630) von Audio, das durch die mehreren Personen bereitgestellt ist,
Analysieren (1810) von Video der mehreren Personen, um Mundbewegungen jeder Person zu bestimmen,
Vergleichen (1820) des Audios mit den Mundbewegungen jeder Person, um Abschnitte des Audios zu bestimmen, die mit jeder Person assoziiert sind,
Übersetzen (1840) der Audioabschnitte, die mit jeder Person assoziiert sind, in Textabschnitte,
Kreieren (1850), für jede Person, einer Sprechblase, die einen Textabschnitt beinhaltet, der mit jeder Person assoziiert ist,
Bestimmen (1860) einer Position des Kopfes jeder Person, basierend auf dem erfassten Bild, und
Positionieren (1870) jeder Sprechblase mit einer entsprechenden Position des Kopfes jeder Person, um ein finales Mehrpersonenbild zu kreieren.

5. Verfahren nach Anspruch 4, wobei, wenn das Objekt (1010) mehrere Personen beinhaltet, das Verfahren ferner Folgendes umfasst:
Analysieren (1830) des Audios, um Abschnitte des Audios zu bestimmen, die mit jeder Person assoziiert sind.

6. Verfahren nach Anspruch 1, wobei das Audio in einer ersten Sprache bereitgestellt ist und wobei das Übersetzen des Audios in Text Folgendes umfasst:
Übersetzen des Audios in Text, der in einer zweiten Sprache bereitgestellt ist, die sich von der ersten Sprache unterscheidet.

7. Verfahren nach Anspruch 1, das ferner Folgendes umfasst:
Erfassen einer Vielzahl von Bildern des Objekts (1010);
Kreieren einer Vielzahl von Sprechblasen, wobei jede der Vielzahl von Sprechblasen einen Abschnitt des Texts beinhaltet; und
Assoziieren jeder der Vielzahl von Sprechblasen mit einem Entsprechenden der Vielzahl von Bildern, um ein zeitlich geordnetes Bild zu kreieren.

8. Verfahren nach Anspruch 1, das ferner Folgendes umfasst:
wenn Anweisungen empfangen werden, um eine Gedankenblasenoperation durchzuführen:
Aufzeichnen (1240) von Audio, das durch den Nutzer der Vorrichtung (200/300) bereitgestellt ist,
Übersetzen des durch den Nutzer bereitgestellten Audios in einen von dem Nutzer bereitgestellten Text,
Kreieren (1260) einer Gedankenblase, die den von dem Nutzer bereitgestellten Text beinhaltet, und
Positionieren der Gedankenblase angrenzend zu der Position des Kopfes der Person in dem erfassten Bild, um ein Gedankenblasenbild zu kreieren.

9. Verfahren nach Anspruch 1, wobei die Vorrichtung (200/300) mindestens eines der Folgenden beinhaltet:
ein Funktelefon;
ein Endgerät eines persönlichen Kommunikationssystems (PCS) ;
eine Kamera;
eine Videokamera mit Kamerafunktionen;
Ferngläser; oder
Videobrillen.

10. Vorrichtung (200/300), die Folgendes umfasst:
einen Speicher, um eine Vielzahl von Anweisungen zu speichern; und
einen Prozessor, um Anweisungen in dem Speicher auszuführen, zum:
Erfassen (1610) eines Bildes eines Objekts (1010),
wenn das Objekt (1010) eine Person ist:
Aufzeichnen (1630) von Audio, das mit dem Objekt (1010) assoziiert ist,
Bestimmen (1650) einer Position des Kopfes der Person in dem erfassten Bild,
Übersetzen (1660) des Audios in Text,
Kreieren (1670) einer Sprechblase, die den Text beinhaltet, und
Positionieren (1680) der Sprechblase angrenzend zu der Position des Kopfes der Person in dem erfassten Bild, um ein finales Bild zu kreieren, und wobei die Vorrichtung (200/300) **dadurch gekennzeichnet ist, dass** der Prozessor ferner Anweisungen in dem Speicher ausführt zum:
wenn das Objekt (1010) ein Tier (1705) ist:
Aufzeichnen (1710) von Audio, der durch einen Nutzer der Vorrichtung (200/300) bereitgestellt ist,
Bestimmen (1715) einer Position des Kopfes des Tieres in dem erfassten Bild,
Übersetzen (1720) des durch den Nutzer bereitgestellten Audios in Text,
Kreieren (1725) einer Sprechblase, die den aus dem durch den Nutzer bereitgestellten Audio übersetzten Text beinhaltet, und
Positionieren (1730) der Sprechblase, die den aus dem durch den Nutzer bereitgestellten Audio übersetzten Text beinhaltet, angrenzend zu der Position des Kopfes des Tieres in dem erfassten Bild, um ein unterschiedliches Bild zu kreieren, und
Anzeigen (1735) des finalen Bildes oder des unterschiedlichen Bildes auf einer Anzeige der Vorrichtung (200/300).

11. Vorrichtung (200/300) nach Anspruch 10, wobei der Prozessor ferner Anweisungen in dem Speicher ausführt zum:
Speichern (1735) des finalen Bildes oder des unterschiedlichen Bildes in dem Speicher.

12. Vorrichtung (200/300) nach Anspruch 10, wobei der Prozessor ferner Anweisungen in dem Speicher ausführt zum:
wenn das Objekt (1010) ein lebloses Objekt ist:
Aufzeichnen (1740) von Audio, das durch den Nutzer der Vorrichtung (200/300) bereitgestellt ist,
Übersetzen (1745) des durch den Nutzer bereitgestellten Audios in einen von dem Nutzer bereitgestellten Text, und
Assoziieren (1750) des von dem Nutzer bereitgestellten Texts mit dem erfassten Bild, um ein benutzerdefiniertes Bild zu kreieren.

13. Vorrichtung (200/300) nach Anspruch 10, wobei der Prozessor ferner Anweisungen in dem Speicher ausführt zum:
wenn das Objekt (1010) mehrere Personen beinhaltet:
Aufzeichnen (1630) von Audio, das durch die mehreren Personen bereitgestellt ist,
Analysieren (1810) von Video der mehreren Personen, um Mundbewegungen jeder Person zu bestimmen,
Vergleichen (1820) des Audios mit den Mundbewegungen jeder Person, um Abschnitte des Audios zu bestimmen, die mit jeder Person assoziiert sind,
Übersetzen (1840) der Audioabschnitte, die mit jeder Person assoziiert sind, in Textabschnitte,
Kreieren (1850), für jede Person, einer Sprechblase, die einen Textabschnitt beinhaltet, der mit jeder Person assoziiert ist,
Bestimmen (1860) einer Position des Kopfes jeder Person, basierend auf dem erfassten Bild, und
Positionieren (1870) jeder Sprechblase mit einer entsprechenden Position des Kopfes jeder Person, um ein finales Mehrpersonenbild zu kreieren.

14. Vorrichtung (200/300) nach Anspruch 13, wobei, wenn das Objekt (1010) mehrere Personen beinhaltet, der Prozessor ferner Anweisungen in dem Speicher ausführt zum:
Analysieren (1830) des Audios, um Abschnitte des Audios zu bestimmen, die mit jeder Person assoziiert sind.

15. Vorrichtung (200/300) nach Anspruch 10, wobei das Audio in einer ersten Sprache bereitgestellt ist und, wenn das Audio in Text übersetzt wird, der Prozessor ferner Anweisungen in dem Speicher ausführt zum:
Übersetzen des Audios in Text, der in einer zweiten Sprache bereitgestellt ist, die sich von der ersten Sprache unterscheidet.

16. Vorrichtung (200/300) nach Anspruch 10, wobei der Prozessor ferner Anweisungen in dem Speicher ausführt zum:
Erfassen einer Vielzahl von Bildern des Objekts (1010),
Kreieren einer Vielzahl von Sprechblasen, wobei jede der Vielzahl von Sprechblasen einen Abschnitt des Texts beinhaltet, und
Assoziieren jeder der Vielzahl von Sprechblasen mit einem Entsprechenden der Vielzahl von Bildern, um ein zeitlich geordnetes Bild zu kreieren.

17. Vorrichtung (200/300) nach Anspruch 10, wobei der Prozessor ferner Anweisungen in dem Speicher ausführt zum:
wenn Anweisungen empfangen werden, um eine Gedankenblasenoperation durchzuführen:
Aufzeichnen (1240) von Audio, das durch den Nutzer der Vorrichtung (200/300) bereitgestellt ist,
Übersetzen des durch den Nutzer bereitgestellten Audios in einen von dem Nutzer bereitgestellten Text,
Kreieren (1260) einer Gedankenblase, die den von dem Nutzer bereitgestellten Text beinhaltet, und
Positionieren der Gedankenblase angrenzend zu der Position des Kopfes der Person in dem erfassten Bild, um ein Gedankenblasenbild zu kreieren.

18. Vorrichtung (200/300), die Folgendes umfasst:
Mittel zum Erfassen (1610) eines Bildes eines Objekts (1010) ;
wenn das Objekt (1010) eine Person ist:
Mittel zum Aufzeichnen (1630) von Audio, das mit dem Objekt (1010) assoziiert ist,
Mittel zum Bestimmen (1650) einer Position des Kopfes der Person in dem erfassten Bild,
Mittel zum Übersetzen (1660) des Audios in Text,
Mittel zum Kreieren (1670) einer Sprechblase, die den Text beinhaltet, und
Mittel zum Positionieren (1680) der Sprechblase angrenzend zu der Position des Kopfes der Person in dem erfassten Bild, um ein finales Bild zu kreieren, und wobei die Vorrichtung (200/300) **dadurch gekennzeichnet ist, dass** die Vorrichtung (200/300) ferner Folgendes umfasst:
wenn das Objekt (1010) ein Tier ist:
Mittel zum Aufzeichnen (1710) von Audio, das durch einen Nutzer der Vorrichtung (200/300) bereitgestellt ist,
Mittel zum Bestimmen (1715) einer Position des Kopfes des Tieres in dem erfassten Bild,
Mittel zum Übersetzen (1720) des durch den Nutzer bereitgestellten Audios in Text,
Mittel zum Kreieren (1725) einer Sprechblase, die den aus dem durch den Nutzer bereitgestellten Audio übersetzten Text beinhaltet, und
Mittel zum Positionieren (1730) der Sprechblase, die den aus dem durch den Nutzer bereitgestellten Audio übersetzten Text beinhaltet, angrenzend zu der Position des Kopfes des Tieres in dem erfassten Bild, um ein unterschiedliches Bild zu kreieren, und
Mittel zum Anzeigen (1735) des finalen oder des unterschiedlichen Bildes; und
Mittel zum Speichern (1735) des finalen oder des unterschiedlichen Bildes.

## Revendications

1. Procédé, comprenant :
la capture (1610), par un dispositif (200/300), d'une image d'un objet (1010) ;
lorsque l'objet (1010) est une personne (1620) :
l'enregistrement (1630), dans une mémoire du dispositif (200/300), de données audio associées à l'objet (1010),
la détermination (1650), par un processeur du dispositif (200/300), d'un emplacement de la tête de la personne dans l'image capturée,
la traduction (1660), par le processeur, des données audio en texte,
la création (1670), par le processeur, d'une bulle de parole qui contient le texte, et
le positionnement (1680), par le processeur, de la bulle de parole de manière adjacente à l'emplacement de la tête de la personne dans l'image capturée pour créer une image finale, et dans lequel le procédé est **caractérisé en ce que** le procédé comprend en outre, lorsque l'objet (1010) est un animal (1705) :
l'enregistrement (1710) de données audio fournies par un utilisateur du dispositif (200/300),
la détermination (1715) d'un emplacement de la tête de l'animal dans l'image capturée,
la traduction (1720) des données audio fournies par l'utilisateur en texte,
la création (1725) d'une bulle de parole qui contient le texte traduit à partir des données audio fournies par l'utilisateur, et
le positionnement (1730) de la bulle de parole, qui contient le texte traduit à partir des données audio fournies par l'utilisateur, de manière adjacente à l'emplacement de la tête de l'animal dans l'image capturée pour créer une image différente.

2. Procédé selon la revendication 1, comprenant en outre :
l'affichage (1735) de l'image finale ou de l'image différente sur un écran du dispositif (200/300) ; et
le stockage (1735) de l'image finale ou de l'image différente dans la mémoire du dispositif (200/300).

3. Procédé selon la revendication 1, comprenant en outre :
lorsque l'objet (1010) est un objet inanimé (1705) :
l'enregistrement (1740) des données audio fournies par l'utilisateur du dispositif (200/300),
la traduction (1745) des données audio fournies par l'utilisateur en texte fourni par l'utilisateur, et
l'association (1750) du texte fourni par l'utilisateur avec l'image capturée pour créer une image définie par l'utilisateur.

4. Procédé selon la revendication 1, comprenant en outre :
lorsque l'objet (1010) comprend de multiples personnes :
l'enregistrement (1630) des données audio fournies par les multiples personnes,
l'analyse (1810) de la vidéo des multiples personnes pour déterminer les mouvements de la bouche de chaque personne,
la comparaison (1820) des données audio aux mouvements de la bouche de chaque personne pour déterminer les parties des données audio qui sont associées à chaque personne,
la traduction (1840) des parties des données audio, associées à chaque personne, en parties de texte,
la création (1850), pour chaque personne, d'une bulle de parole qui contient une partie de texte associée à chaque personne,
la détermination (1860) d'un emplacement de la tête de chaque personne sur la base de l'image capturée, et
le positionnement (1870) de chaque bulle de parole avec un emplacement correspondant de la tête de chaque personne pour créer une image finale des multiples personnes.

5. Procédé selon la revendication 4, comprenant en outre, lorsque l'objet (1010) comprend de multiples personnes, :
l'analyse (1830) des données audio pour déterminer les parties des données audio qui sont associées à chaque personne.

6. Procédé selon la revendication 1, dans lequel les données audio sont fournies dans une première langue et dans lequel la traduction des données audio en texte comprend :
la traduction des données audio en texte fourni dans une seconde langue qui est différente de la première langue.

7. Procédé selon la revendication 1, comprenant en outre :
la capture d'une pluralité d'images de l'objet (1010) ;
la création d'une pluralité de bulles de parole, dans lequel chacune de la pluralité de bulles de parole contient une partie du texte ; et
l'association de chacune de la pluralité de bulles de parole à une image correspondante de la pluralité d'images pour créer une image ordonnée dans le temps.

8. Procédé selon la revendication 1, comprenant en outre :
lors de la réception d'instructions pour effectuer une opération de bulle de pensée :
l'enregistrement (1240) des données audio fournies par l'utilisateur du dispositif (200/300),
la traduction des données audio fournies par l'utilisateur en texte fourni par l'utilisateur,
la création (1260) d'une bulle de pensée qui contient le texte fourni par l'utilisateur, et
le positionnement de la bulle de pensée de manière adjacente à l'emplacement de la tête de la personne dans l'image capturée pour créer une image de bulle de pensée.

9. Procédé selon la revendication 1, dans lequel le dispositif (200/300) comprend au moins un élément parmi :
un radiotéléphone ;
un terminal de système de communications personnelles (PCS) ;
un appareil photo ;
une caméra vidéo avec des capacités de caméra ;
des jumelles ; ou
des lunettes vidéo.

10. Dispositif (200/300) comprenant :
une mémoire pour stocker une pluralité d'instructions ; et
un processeur pour exécuter des instructions dans la mémoire afin de :
capturer (1610) une image d'un objet (1010),
lorsque l'objet (1010) est une personne :
enregistrer (1630) les données audio associées à l'objet (1010),
déterminer (1650) un emplacement de la tête de la personne dans l'image capturée,
traduire (1660) les données audio en texte,
créer (1670) une bulle de parole qui contient le texte, et
positionner (1680) la bulle de parole de manière adjacente à l'emplacement de la tête de la personne dans l'image capturée pour créer une image finale, et dans lequel le dispositif (200/300) est **caractérisé en ce que** le processeur exécute en outre des instructions dans la mémoire pour :
lorsque l'objet (1010) est un animal (1705) :
enregistrer (1710) les données audio fournies par un utilisateur du dispositif (200/300),
déterminer (1715) un emplacement de la tête de l'animal dans l'image capturée,
traduire (1720) les données audio fournies par l'utilisateur en texte,
créer (1725) une bulle de parole qui contient le texte traduit à partir des données audio fournies par l'utilisateur, et
positionner (1730) la bulle de parole, qui contient le texte traduit à partir des données audio fournies par l'utilisateur, de manière adjacente à l'emplacement de la tête de l'animal dans l'image capturée pour créer une image différente, et
afficher (1735) l'image finale ou l'image différente sur un écran du dispositif (200/300).

11. Dispositif (200/300) selon la revendication 10, dans lequel le processeur exécute en outre des instructions dans la mémoire pour :
stocker (1735) l'image finale ou l'image différente dans la mémoire.

12. Dispositif (200/300) selon la revendication 10, dans lequel le processeur exécute en outre des instructions dans la mémoire pour :
lorsque l'objet (1010) est un objet inanimé :
enregistrer (1740) les données audio fournies par l'utilisateur du dispositif (200/300),
traduire (1745) les données audio fournies par l'utilisateur en texte fourni par l'utilisateur, et
associer (1750) le texte fourni par l'utilisateur avec l'image capturée pour créer une image définie par l'utilisateur.

13. Dispositif (200/300) selon la revendication 10, dans lequel le processeur exécute en outre des instructions dans la mémoire pour :
lorsque l'objet (1010) comprend de multiples personnes :
enregistrer (1630) les données audio fournies par les multiples personnes,
analyser (1810) la vidéo des multiples personnes pour déterminer les mouvements de la bouche de chaque personne,
comparer (1820) les données audio aux mouvements de la bouche de chaque personne pour déterminer les parties des données audio qui sont associées à chaque personne,
traduire (1840) les parties des données audio, associées à chaque personne, en parties de texte,
créer (1850), pour chaque personne, une bulle de parole qui contient une partie de texte associée à chaque personne,
déterminer (1860) un emplacement de la tête de chaque personne sur la base de l'image capturée, et
positionner (1870) chaque bulle de parole à un emplacement correspondant de la tête de chaque personne pour créer une image finale de multiples personnes.

14. Dispositif (200/300) selon la revendication 13, dans lequel, lorsque l'objet (1010) comprend de multiples personnes, le processeur exécute en outre des instructions dans la mémoire pour :
analyser (1830) les données audio pour déterminer les parties des données audio qui sont associées à chaque personne.

15. Dispositif (200/300) selon la revendication 10, dans lequel les données audio sont fournies dans une première langue et, lors de la traduction des données audio en texte, le processeur exécute en outre des instructions dans la mémoire pour :
traduire les données audio en texte fourni dans une seconde langue qui est différente de la première langue.

16. Dispositif (200/300) selon la revendication 10, dans lequel le processeur exécute en outre des instructions dans la mémoire pour :
capturer une pluralité d'images de l'objet (1010),
créer une pluralité de bulles de parole, dans lequel chacune de la pluralité de bulles de parole contient une partie du texte ; et
associer chacune de la pluralité de bulles de parole à une image correspondante de la pluralité d'images pour créer une image ordonnée dans le temps.

17. Dispositif (200/300) selon la revendication 10, dans lequel le processeur exécute en outre des instructions dans la mémoire pour :
lorsque des instructions sont reçues pour effectuer une opération de bulle de pensée :
enregistrer (1240) les données audio fournies par l'utilisateur du dispositif (200/300),
traduire les données audio fournies par l'utilisateur en texte fourni par l'utilisateur,
créer (1260) une bulle de pensée qui contient le texte fourni par l'utilisateur, et
positionner la bulle de pensée de manière adjacente à l'emplacement de la tête de la personne dans l'image capturée pour créer une image de bulle de pensée.

18. Dispositif (200/300) comprenant :
un moyen de capturer (1610) une image d'un objet (1010) ;
lorsque l'objet (1010) est une personne :
un moyen d'enregistrer (1630) les données audio associées à l'objet (1010),
un moyen de déterminer (1650) un emplacement de la tête de la personne dans l'image capturée,
un moyen de traduire (1660) les données audio en texte,
un moyen de créer (1670) une bulle de parole qui contient le texte, et
un moyen de positionner (1680) la bulle de parole de manière adjacente à l'emplacement de la tête de la personne dans l'image capturée pour créer une image finale, et dans lequel le dispositif (200/300) est **caractérisé en ce que** le dispositif (200/300) comprend en outre :
lorsque l'objet (1010) est un animal :
un moyen d'enregistrer (1710) les données audio fournies par un utilisateur du dispositif (200/300),
un moyen de déterminer (1715) un emplacement de la tête de l'animal dans l'image capturée,
un moyen de traduire (1720) les données audio fournies par l'utilisateur en texte,
un moyen de créer (1725) une bulle de parole qui contient le texte traduit à partir des données audio fournies par l'utilisateur, et
un moyen de positionner (1730) la bulle de parole, qui contient le texte traduit à partir des données audio fournies par l'utilisateur, de manière adjacente à l'emplacement de la tête de l'animal dans l'image capturée pour créer une image différente, et
un moyen d'afficher (1735) l'image finale ou différente ; et
un moyen de stocker (1735) l'image finale ou différente.
